# EUROPEAN PATENT APPLICATION

(11) **EP 4 814 481 A1**
(43) Date of publication of application: **30.09.2026**
(21) Application number: 24894179.1
(22) Date of filing: 20.11.2024
(51) Int. Cl.: G01N 27/18, G01N 25/18

(54) **GAS CONCENTRATION MEASURING DEVICE AND METHOD FOR MEASURING CONCENTRATION OF GAS TO BE DETECTED IN GAS TO BE MEASURED**

(30) Priority: 20.11.2023 WO PCT/JP2023/041653; 29.03.2024 JP 2024058283
(71) Applicant: Mitsui Kinzoku Company, Limited, Tokyo 141-8584 (JP)
(72) Inventor: MATSUO, Haruki, Ageo-shi, Saitama 362-0021 (JP); IDE, Shingo, Ageo-shi, Saitama 362-0021 (JP); TAKEMURA, Shota, Ageo-shi, Saitama 362-0021 (JP); KOMORI, Yuya, Ageo-shi, Saitama 362-0021 (JP)
(74) Representative: Novagraaf Technologies
(86) International application number: PCT/JP2024/041167
(87) International publication number: WO 2025/110188

(57) **Abstract**

A gas concentration measuring device includes a heating resistor that generates heat when electricity is supplied and a stage supporting the heating resistor. The heating resistor overlaps with the stage in plan view. The stage has an area S of 3.6×10⁷ µm² or less in plan view. S/V is 0.0010 µm⁻¹ or more and 10 µm⁻¹ or less, where V denotes the total volume of the heating resistor and the stage. The gas concentration measuring device measures the concentration of a target gas to be detected in a gas to be measured based on a resistance value of the heating resistor.

## Description

### Technical Field

The present invention relates to a gas concentration measuring device used to measure the concentration of a target gas to be detected in a gas to be measured. The present invention also relates to a method for measuring the concentration of a target gas to be detected in a gas to be measured.

### Background Art

Various devices for measuring a gas concentration in a gas to be measured are conventionally known. One such device is a thermal conductivity gas sensor. In a thermal conductivity gas sensor, heat generated by a heating resistor is conducted to a gas to be measured, and a gas concentration in the gas to be measured is measured using heat lost from the heating resistor.

For example, Patent Literature 1 describes a combustible gas detector including a thermal conductivity gas detection unit.

### Citation List

### Patent Literature

Patent Literature 1: JP 2005-156364A

### Summary of Invention

As exemplified in Patent Literature 1, various gas sensors have been proposed to date; however these gas sensors have left room for improvement in terms of simplicity of manufacture.

Accordingly, an object of the present invention is to provide a gas concentration measuring device that can be manufactured by a simple process.

The present invention provides a gas concentration measuring device comprising:
a heating resistor that generates heat when electricity is supplied ; and
a stage supporting the heating resistor,
wherein the heating resistor overlaps with the stage in plan view,
the stage has an area S of 3.6×10⁷ µm² or less in plan view,
S/V is 0.0010 µm⁻¹ or more and 10 µm⁻¹ or less, where V denotes the total volume of the heating resistor and the stage, and
the gas concentration measuring device measures the concentration of a target gas to be detected in a gas to be measured based on a resistance value of the heating resistor.

The present invention also provides a method for measuring the concentration of a target gas to be detected in a gas to be measured, using the gas concentration measuring device.

### Brief Description of Drawings

[Fig. 1] Fig. 1 is a perspective view schematically showing a preferred embodiment of a gas concentration measuring device of the present invention.
[Fig. 2] Fig. 2 is a plan view showing the position and shape of a heating resistor in the gas concentration measuring device shown in Fig. 1.
[Fig. 3-1] Fig. 3-1 is a cross-sectional view taken along line III-III of the gas concentration measuring device shown in Fig. 1.
[Fig. 3-2] Fig. 3-2 is a cross-sectional view taken along line IV-IV of the gas concentration measuring device shown in Fig. 1.
[Fig. 3-3] Fig. 3-3 is a cross-sectional view showing another embodiment of the gas concentration measuring device of the present invention and corresponding to Fig. 3-2.

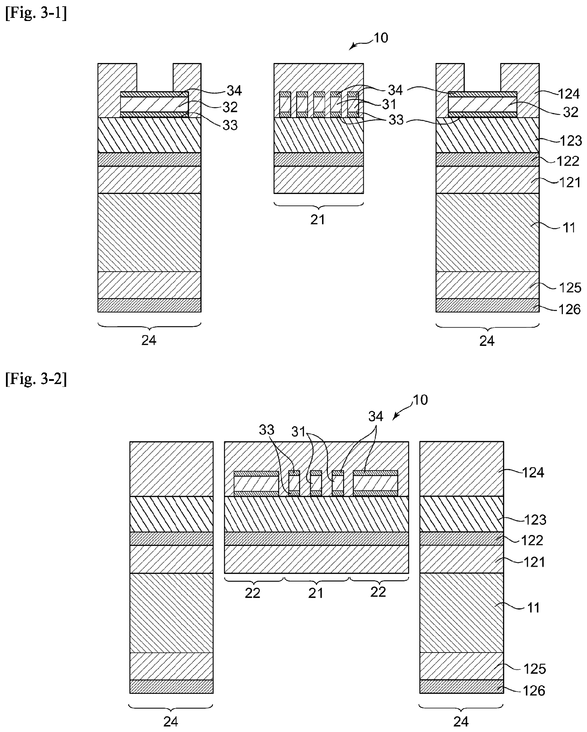

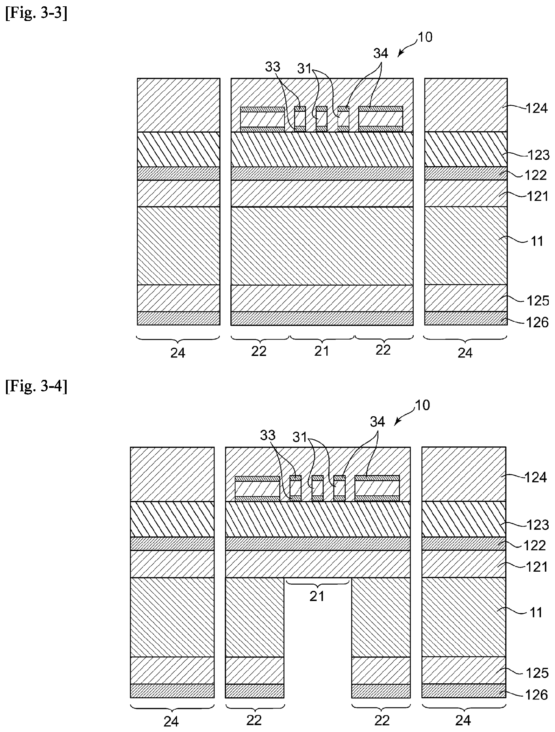

[Fig. 3-4] Fig. 3-4 is a cross-sectional view showing another embodiment of the gas concentration measuring device of the present invention and corresponding to Fig. 3-2.

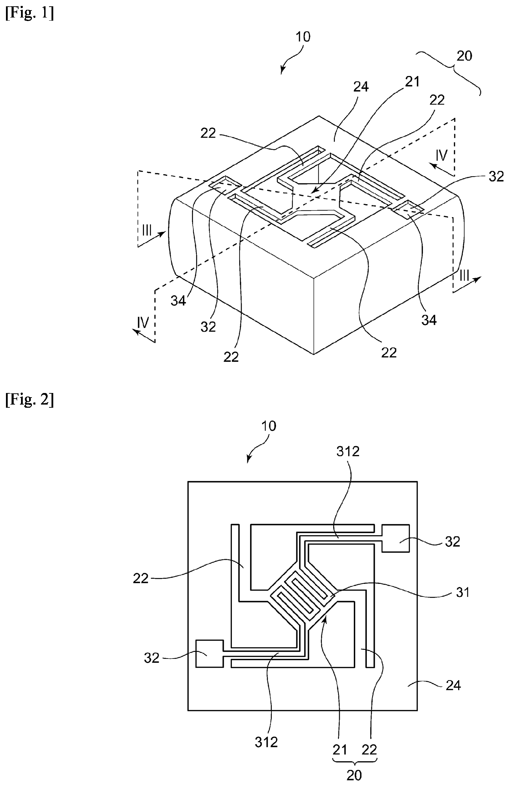

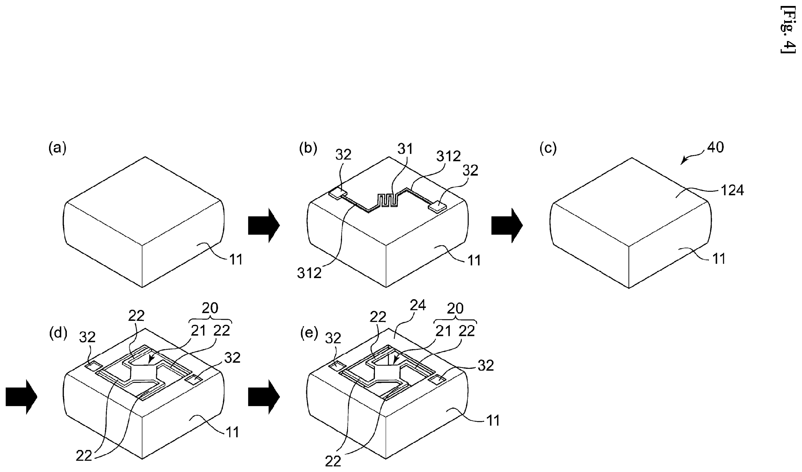

[Fig. 4] Fig. 4 is a perspective view schematically showing a preferred method for manufacturing the gas concentration measuring device shown in Fig. 1.

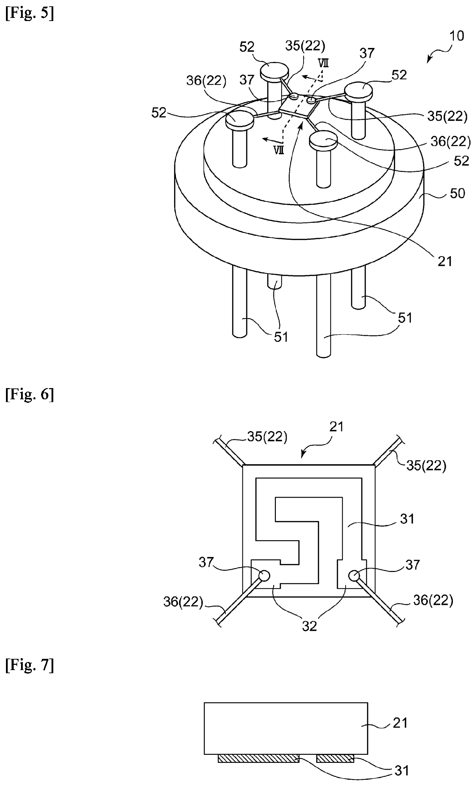

[Fig. 5] Fig. 5 is a perspective view schematically showing another embodiment of the gas concentration measuring device of the present invention.
[Fig. 6] Fig. 6 is a plan view of a stage of the gas concentration measuring device shown in Fig. 5, as viewed from the back side.
[Fig. 7] Fig. 7 is a cross-sectional view taken along line VII-VII of the gas concentration measuring device shown in Fig. 5.

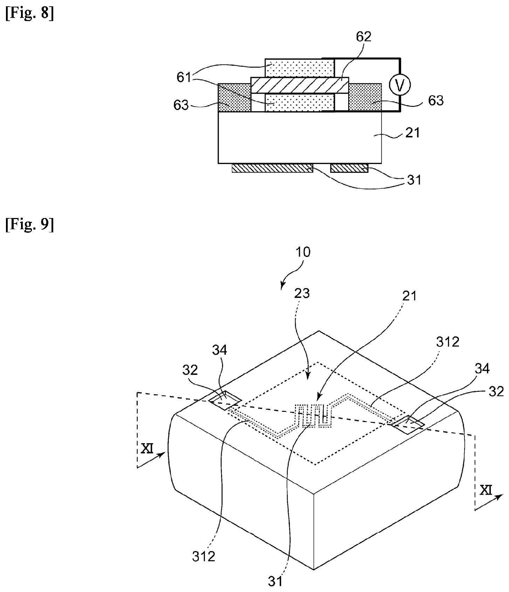

[Fig. 8] Fig. 8 is a cross-sectional view showing a gas concentration measuring device of Comparative Example 1 and corresponding to Fig. 7.
[Fig. 9] Fig. 9 is a perspective view schematically showing another embodiment of the gas concentration measuring device of the present invention and corresponding to Fig. 1.

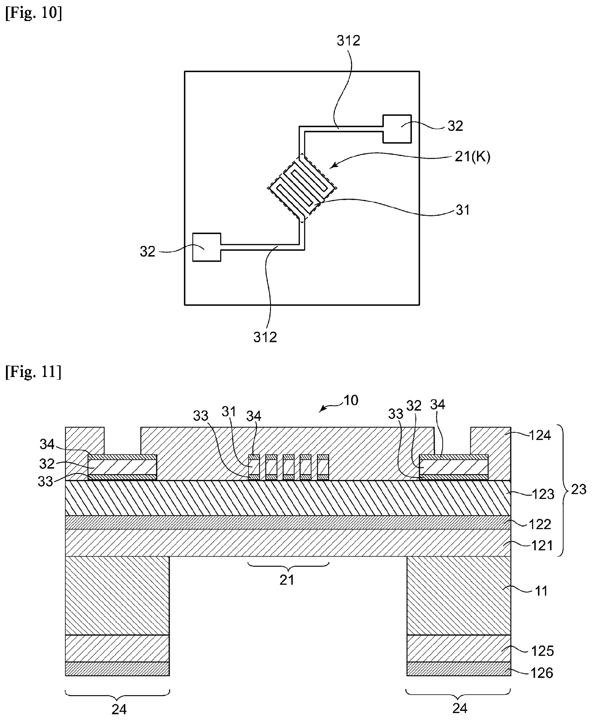

[Fig. 10] Fig. 10 is a plan view showing the position and shape of a heating resistor in the gas concentration measuring device shown in Fig. 9 and corresponding to Fig. 2.
[Fig. 11] Fig. 11 is a cross-sectional view taken along line XI-XI of the gas concentration measuring device shown in Fig. 9 and corresponding to Fig. 3-1.

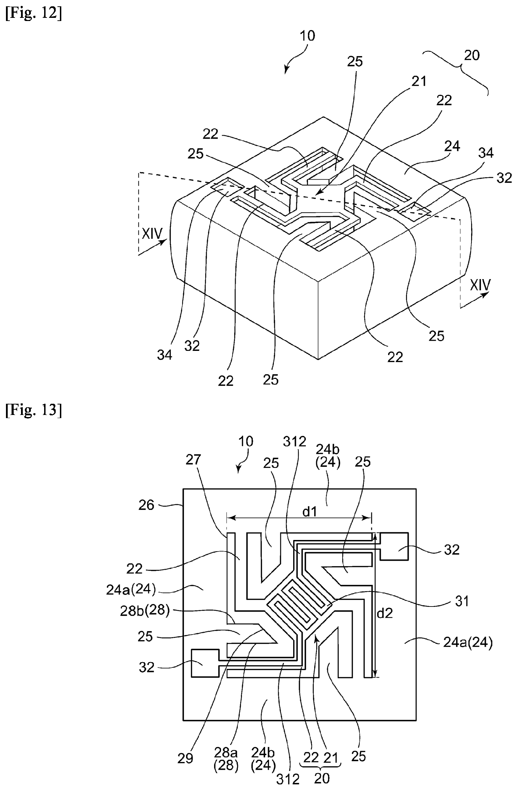

[Fig. 12] Fig. 12 is a perspective view schematically showing another embodiment of the gas concentration measuring device of the present invention and corresponding to Fig. 1.
[Fig. 13] Fig. 13 is a plan view showing the position and shape of a heating resistor in the gas concentration measuring device shown in Fig. 12 and corresponding to Fig. 2.

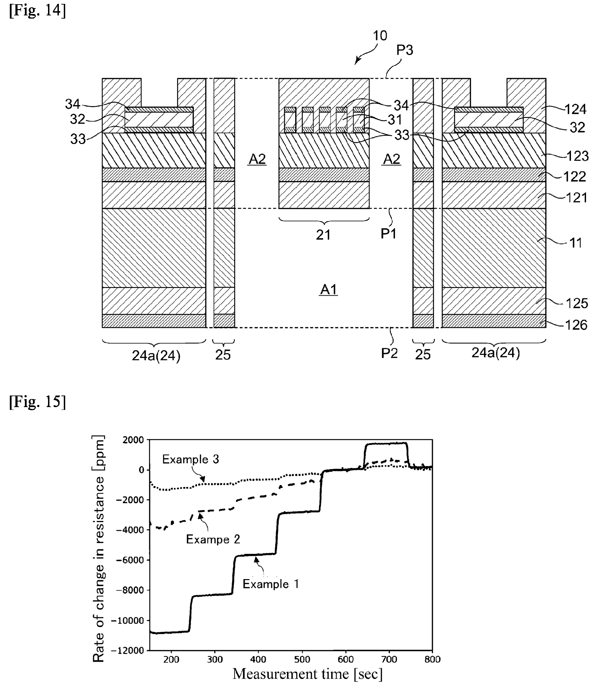

[Fig. 14] Fig. 14 is a cross-sectional view taken along line XIV-XIV of the gas concentration measuring device shown in Fig. 12 and corresponding to Fig. 3-1.
[Fig. 15] Fig. 15 is a graph showing the relationship between measurement time and the rate of change in resistance of a heating resistor when gas concentration measuring devices of Examples 1 to 3 are energized under a constant power condition of 80 mW.

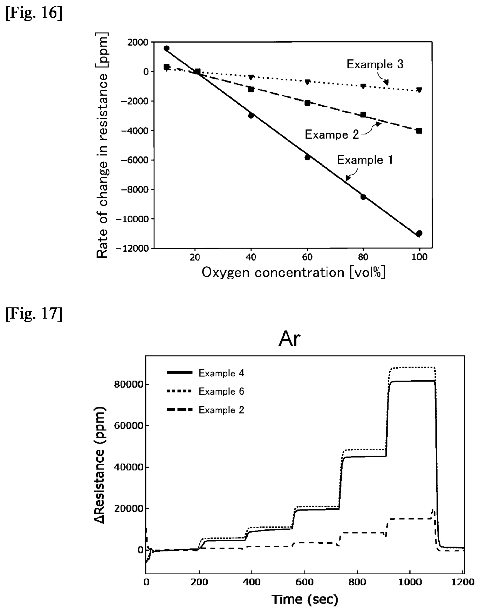

[Fig. 16] Fig. 16 is a graph showing the relationship between the oxygen gas concentration in a gas to be measured and the rate of change in resistance of the heating resistor when the gas concentration measuring devices of Examples 1 to 3 are energized under a constant power condition of 80 mW.
[Fig. 17] Fig. 17 is a graph showing the relationship between measurement time and the rate of change in resistance of a heating resistor when gas concentration measuring devices of Examples 2, 4, and 6 are energized in a flow of a mixed gas of argon and nitrogen.

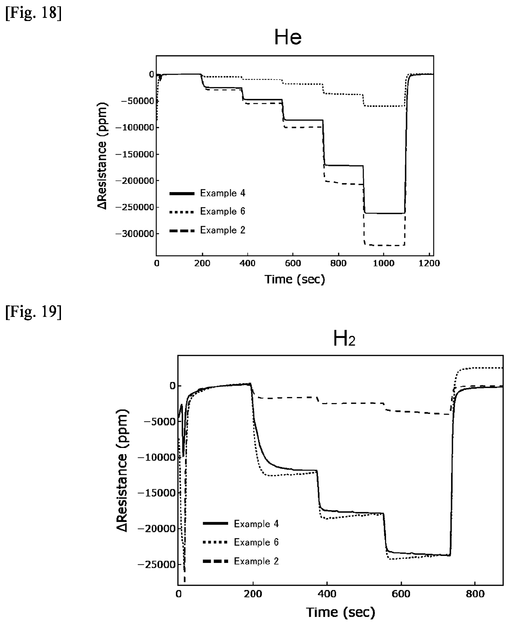

[Fig. 18] Fig. 18 is a graph showing the relationship between measurement time and the rate of change in resistance of the heating resistor when the gas concentration measuring devices of Examples 2, 4, and 6 are energized in a flow of a mixed gas of helium and nitrogen.
[Fig. 19] Fig. 19 is a graph showing the relationship between measurement time and the rate of change in resistance of the heating resistor when the gas concentration measuring devices of Examples 2, 4, and 6 are energized in a flow of a mixed gas of hydrogen and nitrogen.

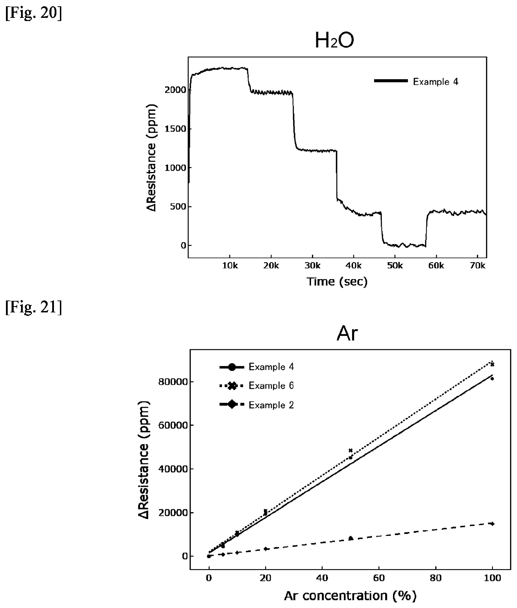

[Fig. 20] Fig. 20 is a graph showing the relationship between measurement time and the rate of change in resistance of the heating resistor when the gas concentration measuring device of Example 4 is energized in an atmosphere a mixed gas of water vapor and nitrogen.
[Fig. 21] Fig. 21 is a graph showing the relationship between the argon gas concentration in a gas to be measured and the rate of change in resistance of the heating resistor when the gas concentration measuring devices of Examples 2, 4, and 6 are energized in a flow of a mixed gas of argon and nitrogen.

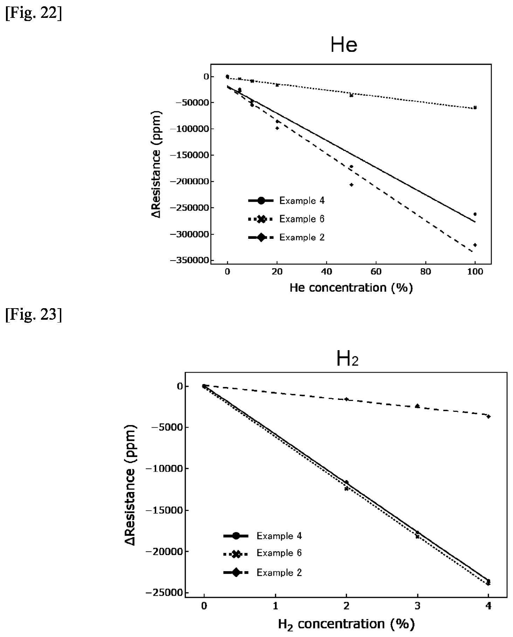

[Fig. 22] Fig. 22 is a graph showing the relationship between the helium concentration in a gas to be measured and the rate of change in resistance of the heating resistor when the gas concentration measuring devices of Examples 2, 4, and 6 are energized in a flow of a mixed gas of helium and nitrogen.
[Fig. 23] Fig. 23 is a graph showing the relationship between the hydrogen gas concentration in a gas to be measured and the rate of change in resistance of the heating resistor when the gas concentration measuring devices of Examples 2, 4, and 6 are energized in a flow of a mixed gas of hydrogen and nitrogen.

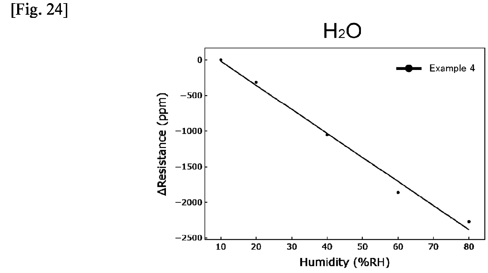

[Fig. 24] Fig. 24 is a graph showing the relationship between the relative humidity in a gas to be measured and the rate of change in resistance of the heating resistor when the gas concentration measuring device of Example 4 is energized in an atmosphere a mixed gas of water vapor and nitrogen.

### Description of Embodiments

The present invention will be described below based on preferred embodiments thereof with reference to the drawings.

Figs. 1, 2, 3-1, and 3-2 show a preferred embodiment of a gas concentration measuring device of the present invention. A gas concentration measuring device 10 (hereinafter also referred to as "device 10") of the present embodiment includes a stage 21 and one or more bridges 22 extending from the periphery of the stage 21, such that a bridge structure 20 is formed. In the device 10 shown in Fig. 1, the bridge structure 20 includes a stage 21 formed of a plate-like body having a rectangular shape in plan view, and four bridges 22 extending from the periphery of the stage 21. The bridges 22 extend from the four corners of the stage 21. Furthermore, the device 10 has a peripheral portion 24 connected to the bridges 22 and surrounding the stage 21. Note that the shape of the stage 21 in plan view is not limited to rectangular.

As shown in Fig. 3-1, the stage 21 has a multilayer structure. More specifically, the stage 21 has a four-layer structure including a first insulating layer 121, a second insulating layer 122 disposed on the first insulating layer 121, a third insulating layer 123 disposed on the second insulating layer 122, and a fourth insulating layer 124 disposed on the third insulating layer 123. However, the layer structure of the stage 21 is not limited to this, and, for example, the stage 21 may have a single-layer structure, a two-layer structure, or a three-layer structure.

Note that in the device 10 shown in Fig. 2, the fourth insulating layer 124 and a second adhesion layer 34, which will be described later, are omitted from the illustration in order to clearly show the position and shape of a heating resistor 31, which will be described later.

The device 10 includes a heating resistor 31 that generates heat when electricity is supplied. The heating resistor 31 is supported by the stage 21 and overlaps with the stage 21 in plan view. More specifically, in the embodiment shown in Figs. 1, 2, 3-1, and 3-2, the stage 21 contains the heating resistor 31 therein its thickness direction. In the present embodiment, the heating resistor 31 is positioned on the third insulating layer 123, with the fourth insulating layer 124 positioned over and on the sides of the heating resistor 31. When the heating resistor 31 is enclosed by the third insulating layer 123 and the fourth insulating layer 124 in this manner and is thereby prevented from contacting the surrounding gas, the durability of the heating resistor 31 can be improved.

The heating resistor 31 is preferably composed of one or two or more filamentary elements, and more preferably composed of a series of filamentary elements. The term "a series of filamentary elements" as used herein refers to either a single filamentary element or a plurality of filamentary elements having at least both end portions in common.

The series of filamentary elements disposed within the stage 21 in the thickness direction forms the heating resistor 31 within the stage 21 in the thickness direction. Furthermore, the series of filamentary elements extends to the two bridges 22 and the peripheral portion 24 to form two wires 312. That is, the series of filamentary elements includes the heating resistor 31 disposed within the stage 21 in the thickness direction and the wires 312 extending to the bridges 22 and the peripheral portion 24. To enable the formation of these two wires 312, it is preferable that two or more bridges 22 extend from the periphery of the stage 21. Furthermore, from the viewpoint of more stably supporting the stage 21, it is preferable that preferably three or more, and more preferably four or more, bridges 22 extend from the periphery of the stage 21.

The heating resistor 31 is connected to the two wires 312 and is further connected via the two wires 312 to two wire bonding pads 32 (hereinafter also referred to simply as "pads 32") disposed in the peripheral portion 24. The wires 312 have a shape extending in one direction within the respective bridges 22.

The heating resistor 31 shown in Fig. 2 is constituted by a single filamentary element. This filamentary element extends within the stage 21 in a meandering pattern repeatedly in one direction and the opposite direction without crossing. By the filamentary element having such a shape, the resistance value of the heating resistor 31 can be increased. As a result, gas concentration can be measured with lower power consumption.

An example of embodiments in which the heating resistor 31 is composed of a plurality of filamentary elements having at least both end portions in common is an embodiment (not shown) in which the plurality of filamentary elements are arranged so as not to cross each other within the stage 21 and portions of the plurality of filamentary elements that are disposed within the bridges 22 are in common (overlapping with each other).

From the viewpoints of sufficiently increasing the physical strength of the heating resistor 31 and sufficiently increasing the resistance value of the heating resistor 31 to reduce the power consumption of the device 10, the thickness of the heating resistor 31 is preferably 0.01 µm or more and 100 µm or less, more preferably 0.02 µm or more and 75 µm or less, and even more preferably 0.05 µm or more and 50 µm or less.

The thickness of the heating resistor and the first and second adhesion layers 33 and 34 described later can be measured using a stylus profilometer, an electron microscope, or an optical three-dimensional measuring device.

When the heating resistor 31 is composed of one or two or more filamentary elements, the ratio R_{S}/R_{B} of R_{S} to R_{B} is preferably within a predetermined numerical range, where R_{B} denotes the resistance value of portions of the wires 312 overlapping with the bridges 22 in plan view, and R_{S} denotes the resistance value of the heating resistor 31. More specifically, R_{S}/R_{B} is preferably 0.01 or more, more preferably 0.1 or more, and even more preferably 1 or more. By setting R_{S}/R_{B} to 0.01 or more, heat dissipation from the portions of the wires 312 overlapping with the respective bridges 22 in plan view is reduced, whereby the accuracy and sensitivity of the measurement of the concentration of the target gas to be detected can be improved.

Also, R_{S}/R_{B} is preferably 10000 or less, more preferably 1000 or less, and even more preferably 100 or less. By setting R_{S}/R_{B} to 10000 or less, the wires 312 and the heating resistor 31 can be suitably designed, whereby the device 10 can be easily formed.

To set R_{S}/R_{B} within the above-described numerical range, for example, the width or thickness of the filamentary element or filamentary elements in the stage 21 and in the bridges 22 may be appropriately adjusted.

When the heating resistor 31 is electricity is supplied to generate heat, the amount of heat generated eventually balances with the amount of heat absorbed by the surrounding gas to be measured, and a steady state is reached. The temperature of the heating resistor 31 at this time depends on the thermal conductivity (heat absorption property) of the gas to be measured. Since the thermal conductivity of the gas to be measured varies with the composition of the gas, the temperature of the heating resistor in the steady state varies according to the composition of the gas to be measured. Therefore, the concentration of a gas in the gas to be measured can be measured based on the resistance value of the heating resistor 31 at this time.

As a result of research conducted by the inventors of the present invention, it was found that, by setting the heat capacity of the heating resistor 31 and its surroundings to a predetermined value or less, the amount of change in the temperature of the heating resistor 31 corresponding to a change in the concentration of the target gas to be detected can be sufficiently increased, and thus the measurement accuracy and measurement sensitivity of the concentration of the target gas to be detected in the gas to be measured can be improved. More specifically, the total heat capacity of the heating resistor 31 and the stage 21 is preferably 3.2×10⁻² J/K or less, more preferably 2.2×10⁻² J/K or less, even more preferably 1.5×10⁻² J/K or less, yet even more preferably 1.0×10⁻³ J/K or less, yet even more preferably 1.0×10⁻⁴ J/K or less, and particularly preferably 4.0×10⁻⁵ J/K or less. Also, from the viewpoint of reducing power consumption, the total heat capacity of the heating resistor 31 and the stage 21 is preferably 1.0×10⁻¹⁰ J/K or more, more preferably 1.0×10⁻⁹ J/K or more, even more preferably 2.0×10⁻⁹ J/K or more, yet even more preferably 1.0×10⁻⁸ J/K or more, and particularly preferably 1.0×10⁻⁷ J/K or more.

As previously described, the device 10 shown in Figs. 1, 2, 3-1, and 3-2 has the bridge structure 20 including the stage 21, which contains the heating resistor 31 therein, and the bridges 22. By employing the device 10 having such a structure as the gas concentration measuring device of the present invention, the total heat capacity of the heating resistor 31 and the stage 21 can be easily controlled so as to be within the above-described range.

From the viewpoints of controlling the total heat capacity of the heating resistor 31 and the stage 21 so as to be within the above-described range and ensuring sufficient mechanical strength, the area S of the stage 21 in plan view is preferably 3.6×10⁷ µm² or less, more preferably 3.0×10⁷ µm² or less, even more preferably 2.5×10⁷ µm² or less, yet even more preferably 9.0×10⁶ µm² or less, and particularly preferably 4.0×10⁶ µm² or less.

Also, from the viewpoint of improving the efficiency of heat transfer with the gas to be measured, S is preferably 100 µm² or more, more preferably 200 µm² or more, even more preferably 400 µm² or more, yet even more preferably 2.5×10³ µm² or more, and particularly preferably 1.5×10⁴ µm² or more.

From the same viewpoints, when the stage 21 is rectangular, the length of one side of the stage 21 is preferably 10 µm or more and 3000 µm or less, more preferably 12.5 µm or more and 2500 µm or less, and even more preferably 20 µm or more and 2000 µm or less, provided that S is within the above-described range.

From the viewpoint of ensuring a sufficient amount of heat to be absorbed by the gas to be measured, thereby improving the accuracy and sensitivity of the measurement of the concentration of the target gas to be detected, S/V is preferably 0.0010 µm⁻¹ or more, more preferably 0.00125 µm⁻¹ or more, even more preferably 0.0016 µm⁻¹ or more, and yet even more preferably 0.010 µm⁻¹ or more, where V denotes the total volume of the heating resistor 31 and the stage 21.

Also, from the viewpoint of reducing power consumption, S/V is preferably 10 µm⁻¹ or less, more preferably 7.0 µm⁻¹ or less, even more preferably 5.0 µm⁻¹ or less, yet even more preferably 3.0 µm⁻¹ or less, and particularly preferably 1.0 µm⁻¹ or less.

From the viewpoint of further improving the accuracy and sensitivity of the measurement of the concentration of the target gas to be detected, the resistance value of the heating resistor 31 is preferably highly temperature-dependent. More specifically, the temperature coefficient of resistance αₜ of the heating resistor 31 at 25°C is preferably 100 ppm/°C or more, more preferably 500 ppm/°C or more, and even more preferably 1000 ppm/°C or more. Materials having a temperature coefficient of resistance αₜ of 100 ppm/°C or more at 25°C include platinum, tungsten, copper, gold, silver, molybdenum, aluminum, tantalum, and alloys thereof. Examples of alloys containing platinum include Pt-Nb, Pt-Rh, Pt-W, and the like. In addition, other examples include cermets composed of platinum group elements (platinum, palladium, rhodium, ruthenium, iridium, and osmium) and/or alloys thereof with metal oxides. Therefore, the heating resistor 31 preferably contains one or more selected from the group consisting of these materials. In particular, in view of stability in high-temperature environments, the heating resistor 31 particularly preferably contains platinum or an alloy containing platinum.

From the viewpoint of improving the adhesion between the heating resistor 31 and the third and fourth insulating layers 123 and 124 and improving the durability of the device 10, it is preferable that a first adhesion layer 33 and a second adhesion layer 34 are disposed at positions in contact with the lower surface and the upper surface, respectively, of the heating resistor 31.

When the first adhesion layer 33 and the second adhesion layer 34 are disposed at positions in contact with the lower surface and the upper surface of the heating resistor 31, it is preferable that the first adhesion layer 33 and the second adhesion layer 34 are also disposed at positions in contact with the lower surfaces and the upper surfaces of the wires 312 and the pads 32.

From the viewpoint of sufficiently improving the adhesion between the heating resistor 31 and the third and fourth insulating layers 123 and 124, the first adhesion layer 33 and the second adhesion layer 34 each independently preferably have a thickness of 1 nm or more and 200 nm or less, more preferably 2 nm or more and 150 nm or less, and even more preferably 10 nm or more and 100 nm or less.

As shown in Figs. 1 and 3-1, the fourth insulating layer 124 disposed on the pads 32 is partially removed. Accordingly, the second adhesion layer 34 (or, in an embodiment without the second adhesion layer, a portion of each pad 32) is exposed to the outside.

As described above, the device 10 has the peripheral portion 24 that surrounds the stage 21. Preferably, the peripheral portion 24 is spaced apart from the stage 21 and connected thereto via the bridges 22.

The peripheral portion 24 preferably includes a substrate 11 and a plurality of insulating layers formed above and below the substrate 11. More specifically, as shown in Fig. 3-1, the first insulating layer 121, the second insulating layer 122, the third insulating layer 123, and the fourth insulating layer 124 are disposed in this order above the substrate 11. Furthermore, a fifth insulating layer 125 and a sixth insulating layer 126 are disposed in this order below the substrate 11.

The device 10 may or may not include the fifth insulating layer 125 and the sixth insulating layer 126. The stress applied to the substrate 11 can be adjusted by the presence or absence of the fifth insulating layer 125 and the sixth insulating layer 126.

In the device 10, the upper surface (the surface facing the fourth insulating layer 124) of the peripheral portion 24 has a substantially flat shape except at positions corresponding to the pads 32. The lower surface (the surface facing the sixth insulating layer 126) of the peripheral portion 24 also has a substantially flat shape.

As shown in Fig. 3-2, in the device 10 of the present embodiment, the stage 21 and the bridges 22 have the same thickness, which is smaller than the thickness of the peripheral portion 24. However, the thickness relationship among the stage 21, the bridges 22, and the peripheral portion 24 is not limited thereto.

For example, as shown in Fig. 3-3, all of the stage 21, the bridges 22, and the peripheral portion 24 may have the same thickness. Furthermore, as shown in Fig. 3-4, the bridges 22 and the peripheral portion 24 may have the same thickness, with the thickness of the stage 21 being smaller than that of the bridges 22 and the peripheral portion 24.

Next, the materials of the layers described above will be described.

The substrate 11 preferably contains silicon (Si).

The plurality of insulating layers formed above and below the substrate 11 preferably contain a silicon (Si) compound in view of availability, ease of formation, and chemical stability, and more preferably contain silicon dioxide (SiO₂) and silicon nitride (SiNₓ, where x is a number of 0.100 or more and 1.667 or less). More specifically, it is preferable that the first insulating layer 121, the third insulating layer 123, the fourth insulating layer 124, and the fifth insulating layer 125 are composed of SiO₂, and the second insulating layer 122 and the sixth insulating layer 126 are composed of SiNₓ.

From the viewpoint of improving adhesion to the third insulating layer 123 and the fourth insulating layer 124, the first adhesion layer 33 and the second adhesion layer 34 preferably contain one or more selected from tantalum (Ta), titanium (Ti), titanium nitride, titanium oxide, titanium oxynitride, tantalum oxide, zirconium, zirconium oxide, yttrium, yttrium oxide, tungsten, tungsten oxide, chromium, chromium oxide, nickel, nickel oxide, and alloys thereof.

The material of the heating resistor 31 is as previously described. As the material of the pads 32, the materials described above for the heating resistor 31 can be used. The heating resistor 31 and the pads 32 may be made of different materials or the same material. From the viewpoint of enabling simple manufacturing and suppressing manufacturing costs, the heating resistor 31 and the pads 32 are preferably made of the same material.

Fig. 5 shows a device 10 of another embodiment of the present invention. Fig. 6 shows a plan view of a stage 21 (details of which will be described later) constituting the device 10 of the embodiment shown in Fig. 5, as viewed from the back side. Furthermore, Fig. 7 shows a cross-sectional view of the device 10 of the embodiment shown in Fig. 5 taken along line VII-VII.

Hereinafter, the present embodiment will be mainly described in terms of differences from the embodiment shown in Figs. 1, 2, 3-1, and 3-2. For matters not specifically described in the present embodiment, the description of the embodiment shown in Figs. 1, 2, 3-1, and 3-2 may be applied as appropriate.

The device 10 of the present embodiment includes a terminal block 50 and a plurality of columnar members 51 extending through the terminal block 50 in its thickness direction. A wire bonding terminal 52 is provided on the upper surface of each columnar member 51.

The device 10 includes a stage 21 and a plurality of bridges 22 extending from the periphery of the stage 21. The stage 21 is fixed to the terminals 52 via the plurality of bridges 22. More specifically, as shown in Fig. 5, the stage 21 is joined to the bridges 22 (hereinafter also referred to as "first supports 35") at two joining portions 37 on the upper surface of the stage 21. Furthermore, as shown in Fig. 6, the stage 21 is also joined to the bridges 22 (hereinafter also referred to as "second supports 36") at two joining portions 37 on the back surface of the stage 21.

As shown in Fig. 5, the bridges 22 of the present embodiment have a wire-like shape.

As shown in Figs. 6 and 7, a heating resistor 31 and two pads 32 are formed on one surface of the stage 21. In other words, the stage 21 supports the heating resistor 31 and the pads 32. The above-described joining portions 37 are provided on the respective pads 32, and the pads 32 are joined to the corresponding second supports 36 at these joining portions 37. When a conductive material is used as the material of the second supports 36, the heating resistor 31 is electrically connected to the columnar members 51 via the second supports 36, and therefore, the heating resistor 31 can be energized by connecting the columnar members 51 to a power supply. For this purpose, the second supports 36 preferably contains platinum, for example.

In contrast, in the present embodiment, the first supports 35 are used solely to support the stage 21. Accordingly, the material of the first supports 35 is not limited to a conductive material.

The heating resistor 31 of the present embodiment is constituted by a single filamentary element that does not extend to the bridges 22.

The stage 21 may have either a single-layer structure or a multilayer structure; however, from the viewpoint of further simplifying manufacturing, the stage 21 preferably has a single-layer structure. Examples of materials for the stage 21 include silicon, alumina, glass, forsterite, polyimide, polyamide, polycarbonate, polyamide-imide, polyacetal, polyphenylene ethers, polybutylene terephthalate, fluororesins, epoxy resins, phenolic resins, and the like.

The thickness of the stage 21 is preferably 0.5 µm or more and 2000 µm or less, more preferably 1.0 µm or more and 1000 µm or less, and even more preferably 1.5 µm or more and 500 µm or less, from the viewpoints of ensuring sufficient physical strength and reducing the heat capacity of the stage 21.

From the viewpoints of increasing the physical strength of the first supports 35 and the second supports 36 and suppressing heat dissipation from the heating resistor, the first supports 35 and the second supports 36 each independently preferably have a wire size of 1.0 µm or more and 100 µm or less, more preferably 5.0 µm or more and 80 µm or less, and even more preferably 10 µm or more and 50 µm or less.

The terminal block 50 is preferably made of an insulating material, and the columnar members 51 and the terminals 52 are preferably made of a conductive material. The columnar members 51 and the terminals 52 may be made of the same material or different materials.

Figs. 9 to 11 show a device 10 of yet another embodiment of the present invention. Hereinafter, the present embodiment will be mainly described in terms of differences from the embodiment shown in Figs. 1, 2, 3-1, and 3-2. For matters not specifically described in the present embodiment, the description of the embodiment shown in Figs. 1, 2, 3-1, and 3-2 may be applied as appropriate. Figs. 9 to 11 correspond respectively to Figs. 1, 2, and 3-1.

The device 10 of the present embodiment differs from the device 10 shown in Figs. 1, 2, 3-1, and 3-2 in that the first insulating layer 121, the second insulating layer 122, and the third insulating layer 123 are disposed over the entire region of the device 10 in its planar direction (Fig. 11). Furthermore, the fourth insulating layer 124 is also disposed over the entire region of the device 10 in its planar direction, except at portions where the pads 32 are located. Due to this structure, the device 10 of the present embodiment does not include the bridges 22 and the bridge structure 20 (Figs. 9 and 10).

That is, the device 10 includes a diaphragm 23 including the first insulating layer 121, the second insulating layer 122, the third insulating layer 123, and the fourth insulating layer 124, and a peripheral portion 24 surrounding the diaphragm 23, the heating resistor 31 being provided at a position within the diaphragm 23 in its thickness direction. The diaphragm 23 is formed of a thin film, and its thickness may be the same as the thickness of the stage 21 described above. The diaphragm 23 is rectangular, and the length of one side thereof is preferably 100 µm or more and 4500 µm or less, more preferably 150 µm or more and 3000 µm or less, and even more preferably 200 µm or more and 1500 µm or less. However, the shape of the diaphragm 23 is not limited to rectangular.

As shown in Figs. 9 and 10, the device 10 of the present embodiment includes the heating resistor 31 and two wires 312 connecting the heating resistor 31 to the respective pads 32. The heating resistor 31 has respective end portions connected to corresponding end portions of the two wires 312, thereby forming a single filamentary element as a whole.

In the present embodiment, when the heating resistor 31 and the wires 312 are made of the same material, a portion of the filamentary element that is densely arranged due to meandering or the like is defined as the heating resistor 31, while portions of the filamentary element extending outward from the heating resistor 31 are defined as the wires 312. The heating resistor 31 is located substantially at a central portion of the diaphragm 23.

As shown in Fig. 10, in the present embodiment, when the shape obtained by connecting the outer edges of the heating resistor 31 in plan view of the device 10 is referred to as K, a portion overlapping with the shape K in plan view (excluding the heating resistor 31) is defined as the stage 21 of the device 10. In Fig. 10, the shape K is indicated by a dashed line and is rectangular.

Accordingly, the "area S of the stage 21 in plan view" described above is synonymous with the "area of the shape K" in the present embodiment. Also, the "total volume V of the heating resistor 31 and the stage 21" described above is synonymous with the "volume of the portion overlapping with the shape K in plan view" in the present embodiment.

Figs. 12 to 14 show a device 10 of yet another embodiment of the present invention. Hereinafter, the present embodiment will be mainly described in terms of differences from the embodiment shown in Figs. 1, 2, 3-1, and 3-2. For matters not specifically described in the present embodiment, the description of the embodiment shown in Figs. 1, 2, 3-1, and 3-2 may be applied as appropriate. Figs. 12 to 14 correspond respectively to Figs. 1, 2, and 3-1.

The device 10 of the present embodiment includes a stage 21 and at least two bridges 22 extending from the periphery of the stage 21. These stage 21 and bridges 22 form a bridge structure 20. The bridges 22 have a shape extending in one direction. Furthermore, the device 10 includes a peripheral portion 24 spaced apart from the stage 21 and surrounding the stage 21, and the bridges 22 are connected to the peripheral portion 24.

In plan view, the peripheral portion 24 has a hollow rectangular shape defined by a first rectangular portion 26 having four sides and forming an outer contour and a second rectangular portion 27 having four sides and forming an inner contour. The stage 21 is located within the second rectangular portion 27. The sides of the second rectangular portion 27 of the peripheral portion 24 are neither parallel to nor orthogonal to the sides of the stage 21. More specifically, the stage 21 is disposed within the second rectangular portion 27 in such a positional relationship that each corner of the stage 21 faces the corresponding side of the second rectangular portion 27.

Each bridge 22 extends from a corner of the stage 21 along an extension direction of a diagonal of the stage 21. Furthermore, each bridge 22 extends from the corner of the stage 21, is bent at 90 degrees partway to change its extending direction, and is connected to a wall surface of the peripheral portion 24 located on an extension line in the bending direction, that is, the second rectangular portion 27 described above.

As shown in Fig. 13, the peripheral portion 24 surrounding the stage 21 includes a pair of first portions 24a extending in the same direction and facing each other with a distance therebetween, and a pair of second portions 24b extending in a direction orthogonal to the extending direction of the first portions 24a and facing each other with a distance therebetween. Each end of the first portions 24a is connected to a corresponding end of the second portions 24b.

As shown in Figs. 12 to 14, the device 10 includes portions (hereinafter also referred to as "partition walls 25") extending inward from wall portions of the peripheral portion 24 toward the stage 21. Each partition wall 25 is disposed, in plan view, in a space between adjacent bridges 22 so as to separate the bridges 22 from each other.

As shown in Fig. 14, as with the peripheral portion 24, each partition wall 25 includes, along its thickness direction, the first insulating layer 121, the second insulating layer 122, the third insulating layer 123, the fourth insulating layer 124, the substrate 11, the fifth insulating layer 125, and the sixth insulating layer 126, and extends from the upper end to the lower end of the device 10.

In plan view, each partition wall 25 has a shape defined by four sides including a corresponding wall surface (the second rectangular portion 27) of the peripheral portion 24, a pair of protruding side portions 28 extending from the wall surface toward the stage 21 and parallel to each other, and a connecting side portion 29 connecting distal ends of the protruding side portions to each other. The pair of protruding side portions 28 are orthogonal to the wall surface of the peripheral portion 24. The pair of protruding side portions 28 have different lengths. As a result, the connecting side portion 29 is not parallel to the peripheral portion 24. The connecting side portion 29 faces one side of the stage 21 having a quadrilateral shape. The connecting side portion 29 and the one side of the stage 21 facing the connecting side portion 29 are parallel to each other with a distance therebetween. Of the pair of protruding side portions 28, the longer protruding side portion 28a is parallel to, and spaced apart from, a side adjacent to the side from which the protruding side portion 28a protrudes among the four sides constituting the second rectangular portion 27 described above. On the other hand, of the pair of protruding side portions 28, the shorter protruding side portion 28b is parallel to, and spaced apart from, the bridge 22 extending from a corner of the stage 21. The above-described shape of the partition walls 25 in plan view is advantageous in that V' described later can be effectively controlled while ensuring an appropriate distance between the stage 21 and each bridge 22.

From the viewpoint of suppressing heat conduction from the bridges 22 to the partition walls 25, when the device 10 includes the partition walls 25, the minimum distance between the bridges 22 and the partition walls 25 is preferably 5 µm or more, more preferably 10 µm or more, and even more preferably 20 µm or more.

Also, from the viewpoint of reliably forming the partition walls 25 and efficiently controlling V' described later, when the device 10 includes the partition walls 25, the minimum distance between the bridges 22 and the partition walls 25 is preferably 1500 µm or less, more preferably 400 µm or less, yet even more preferably 300 µm or less, and particularly preferably 200 µm or less.

The "minimum distance between the bridges 22 and the partition walls 25" above refers to the minimum of the distances between any point on the bridges 22 and any point on the partition walls 25.

From the viewpoint of suppressing heat conduction from the stage 21 to the partition walls 25, when the device 10 includes the partition walls 25, the minimum distance between the stage 21 and the partition walls 25 is preferably 5 µm or more, more preferably 10 µm or more, and even more preferably 20 µm or more.

Also, from the viewpoint of reliably forming the partition walls 25 and efficiently controlling V described later, when the device 10 includes the partition walls 25, the minimum distance between the stage 21 and the partition walls 25 is preferably 1500 µm or less, more preferably 400 µm or less, yet even more preferably 300 µm or less, and particularly preferably 200 µm or less.

The "minimum distance between the stage 21 and the partition walls 25" above refers to the minimum of the distances between any point on the stage 21 and any point on the partition walls 25.

In the device 10, from the viewpoint of improving the sensitivity and accuracy of the measurement of the concentration of the target gas to be detected, it is preferable that the volume of a space in the device 10 and the area of the device 10 in plan view satisfy a predetermined relationship. More specifically, the value of V'/S is preferably 10 or more and 2.0×10⁹ or less, where V' denotes the total volume of a space A1 located below the stage 21 in the device 10 and a space A2 located between the stage 21 and the peripheral portion 24 in the device 10, and S denotes the area of the stage 21 in plan view. By setting V'/S within this numerical range, heat transfer from the lower surface of the stage 21 can be suppressed, and accordingly, the sensitivity and accuracy of the measurement of the concentration of the target gas to be detected can be improved. From the viewpoint of further enhancing this effect, the value of V'/S is more preferably 10 or more and 1.6×10⁶ or less, even more preferably 50 or more and 7.3×10⁵ or less, yet even more preferably 1.0×10² or more and 1.8×10⁵ or less, and particularly preferably 5.0×10² or more and 1.0×10⁴ or less.

The above-described V' is the sum of the volume of the space A1 and the volume of the space A2. As shown in Fig. 14, the space A1 is a space enclosed by the stage 21, an extension plane P1 of the lower surface of the stage 21, the peripheral portion 24, the partition walls 25, and an extension plane P2 of the lower surface of the peripheral portion 24. The space A2 is a space enclosed by the stage 21, the extension plane P1 of the lower surface of the stage 21, the peripheral portion 24, the partition walls 25, and an extension plane P3 of the upper surface of the stage 21. It should be noted that all of the extension planes P1 to P3 preferably extend in the horizontal direction.

To set V'/S within the above-described numerical range, for example, V' may be appropriately adjusted. V' can be adjusted by, for example, appropriately setting the size of the partition walls 25. Alternatively, the distance d1 between the pair of first portions 24a facing each other and the distance d2 between the pair of second portions 24b facing each other can be appropriately set. More specifically, d1 and d2 are each independently preferably 100 µm or more and 4500 µm or less, more preferably 150 µm or more and 3000 µm or less, and even more preferably 200 µm or more and 1500 µm or less.

From the viewpoint of reducing the time required to reach a steady state in which the amount of heat generated by the heating resistor 31 and the amount of heat absorbed by the surrounding gas to be measured are balanced, V' is preferably 1.8×10¹¹ or more, more preferably 1.6×10¹⁰ µm³ or less, even more preferably 7.2×10⁹ µm³ or less, and yet even more preferably 1.8×10⁹ µm³ or less.

In plan view, the minimum width of each bridge 22 is preferably 5 µm or more, more preferably 7.5 µm or more, even more preferably 10 µm or more, yet even more preferably 20 µm or more, and particularly preferably 30 µm or more. By setting the minimum width of each bridge 22 to 5 µm or more, an effect of ensuring sufficient physical strength of the bridges 22 can be obtained.

Also, the minimum width of each bridge 22 is preferably 1500 µm or less, more preferably 450 µm or less, even more preferably 300 µm or less, and yet even more preferably 200 µm or less. By setting the minimum width of each bridge 22 to 450 µm or less, heat conduction from the stage 21 to the bridges 22 can be further suppressed.

The "minimum width of each bridge 22" above refers to the width of a bridge 22 at a position where the width of the bridge 22 (the length in a direction perpendicular to the longitudinal direction of the bridge 22) is minimized in plan view of the device 10.

The above description regarding V'/S, V', and the minimum width of each bridge 22 is also applicable to an embodiment without the partition walls 25 (for example, the device 10 shown in Fig. 1 and the device 10 shown in Fig. 9).

From the viewpoint of improving the measurement accuracy and measurement sensitivity of the concentration of the target gas to be detected in the gas to be measured, the total heat capacity of the heating resistor 31 and the stage 21 of the device 10 shown in Figs. 12 to 14 is preferably 8.3×10⁻⁶ J/K or less, more preferably 3.9×10⁻⁶ J/K or less, and even more preferably 9.4×10⁻⁷ J/K or less.

Also, from the viewpoint of reducing power consumption, the total heat capacity of the heating resistor 31 and the stage 21 of the device 10 shown in Figs. 12 to 14 is preferably 9.0×10⁻¹⁰ J/K or more, more preferably 1.8×10⁻⁹ J/K or more, and even more preferably 3.7×10⁻⁹ J/K or more.

From the viewpoints of controlling the total heat capacity of the heating resistor 31 and the stage 21 so as to be within the above-described range and ensuring sufficient mechanical strength, the area S of the stage 21 in plan view in the device 10 shown in Figs. 12 to 14 is preferably 3.6×10⁷ µm² or less, more preferably 9.0×10⁶ µm² or less, even more preferably 4.0×10⁶ µm² or less, yet even more preferably 1.0×10⁶ µm² or less, and particularly preferably 4.9×10⁵ µm² or less.

Also, from the viewpoint of improving the efficiency of heat transfer with the gas to be measured, the area S of the stage 21 in plan view in the device 10 shown in Figs. 12 to 14 is preferably 1.0×10² µm² or more, more preferably 2.0×10² or more, even more preferably 4.0×10² µm² or more, yet even more preferably 1.0×10³ µm² or more, yet even more preferably 1.0×10⁴ µm² or more, and particularly preferably 1.0×10⁵ µm² or more.

From the viewpoint of ensuring a sufficient amount of heat to be absorbed by the gas to be measured, thereby improving the accuracy and sensitivity of the measurement of the concentration of the target gas to be detected, the above-described S/V in the device 10 shown in Figs. 12 to 14 is preferably 0.020 µm⁻¹ or more, more preferably 0.040 µm⁻¹ or more, and even more preferably 0.050 µm⁻¹ or more.

Also, from the viewpoint of reducing power consumption, the above-described S/V in the device 10 shown in Figs. 12 to 14 is preferably 10 µm⁻¹ or less, more preferably 7.0 m⁻¹ or less, and even more preferably 5.0 µm⁻¹ or less.

Next, a method for measuring the concentration of a target gas to be detected in a gas to be measured using the device 10 will be described.

The gas to be measured contains the target gas to be detected and a remainder containing a gas other than the target gas to be detected. The remainder may contain only one gas or two or more gases. When the remainder contains two or more gases, from the viewpoint of improving the accuracy of the measurement of the concentration of the target gas to be detected, it is preferable that the proportion of each gas contained in the remainder remains constant during measurement of the target gas to be detected. However, when the remainder contains two or more gases having similar thermal conductivities (e.g., when the remainder contains nitrogen gas and oxygen gas), the proportion of each gas component contained in the remainder need not necessarily remain constant.

When measuring the concentration of the target gas to be detected in the gas to be measured using the device 10, the heating resistor 31 is energized to cause the heating resistor 31 to generate heat. The energization conditions are not particularly limited as long as a favorable linear relationship is established between the concentration of the target gas to be detected in the gas to be measured and the resistance value of the heating resistor. For example, the energization may be performed under a constant power condition, that is, a condition in which the amount of heat generated by the heating resistor 31 due to the energization remains constant even when the concentration of the target gas to be detected in the gas to be measured varies. Alternatively, the energization may be performed under a constant voltage condition, that is, a condition in which a voltage applied to the heating resistor 31 remains constant even when the concentration of the target gas to be detected in the gas to be measured varies, or under a constant current condition, that is, a condition in which a current flowing through the heating resistor 31 remains constant even when the concentration of the target gas to be detected in the gas to be measured varies.

As used herein, "constant power" does not require that the power is strictly constant during measurement of the concentration of the target gas to be detected. For example, during the measurement, if a variation in power is 1% or less, more preferably 0.5% or less, the concentration of the target gas to be detected can be measured with sufficient accuracy. Accordingly, even when such a variation in power occurs during measurement of the concentration of the target gas to be detected, the measurement is regarded as having been performed under a constant power condition. The same applies to the above-described "constant voltage" and "constant current".

Regardless of which of the above energization conditions is adopted, the resistance value of the heating resistor 31 varies depending on the temperature of the heating resistor 31, and thus the concentration of the target gas to be detected can be measured based on the resistance value.

From the viewpoint of promoting absorption of heat from the heating resistor 31 by the gas to be measured and further improving the accuracy of the measurement of the concentration of the target gas to be detected, it is preferable to sufficiently increase the temperature of the heating resistor 31 by energization during measurement of the concentration of the target gas to be detected. More specifically, when measuring the concentration of the target gas to be detected in the gas to be measured, it is preferable to create a temperature difference of 30°C or more, more preferably 60°C or more, and even more preferably 100°C or more, between the heating resistor 31 and the gas to be measured by energizing the heating resistor 31.

Also, from the viewpoint of suppressing thermal degradation of the heating resistor 31, the temperature difference between the heating resistor 31 and the gas to be measured is preferably 800°C or less, more preferably 750°C or less, and even more preferably 700°C or less.

Examples of the target gas to be detected in the gas to be measured include, but are not limited to, oxygen gas, nitrogen gas, argon gas, helium gas, water vapor, hydrogen gas, and carbon dioxide gas. Measurement can be performed as long as there is a difference in thermal conductivity between the target gas to be detected contained in the gas to be measured and other gases. Preferred examples of the target gas to be detected include oxygen gas, argon gas, helium gas, water vapor, and carbon dioxide gas, and particularly preferred examples include oxygen gas, water vapor, and carbon dioxide gas.

Incidentally, when the target gas to be detected is oxygen gas, since oxygen gas has a relatively low thermal conductivity, the change in temperature of the heating resistor 31 associated with variations in the oxygen gas concentration is small. Due to this, there has been a problem in that, in conventional thermal conductivity gas sensors, the measurement accuracy of oxygen gas concentration tends to be low. Furthermore, in the case where the gas to be measured is a gas containing oxygen gas and nitrogen gas, such as air, since oxygen gas and nitrogen gas have similar thermal conductivities, it has been particularly difficult to measure the oxygen gas concentration with high accuracy using conventional thermal conductivity gas sensors.

In contrast, in the device 10, since, as described above, the amount of change in temperature of the heating resistor 31 in response to variations in the concentration of the target gas to be detected is sufficiently increased, the concentration can be measured with high accuracy even when the target gas to be detected is oxygen gas. Furthermore, according to the device 10, even when the gas to be measured contains oxygen gas and nitrogen gas, the oxygen gas concentration can be measured with high accuracy.

From the viewpoint of utilizing the above-described advantages of the device 10, the total content of oxygen gas and nitrogen gas in the gas to be measured is preferably 0.00001 vol% or more, more preferably 0.0001 vol% or more, and even more preferably 0.001 vol% or more.

It should be noted that water vapor also has a thermal conductivity similar to those of oxygen gas and nitrogen gas. Accordingly, the device 10 is also excellent in that it can measure humidity in a gas to be measured (e.g., air) containing oxygen gas and/or nitrogen gas with high accuracy.

As described above, in the device 10, even when the heating resistor 31 alone is provided as a member sensitive to the target gas to be detected, the concentration of the target gas to be detected in the gas to be measured can be measured with high accuracy. Thus, the device 10 can be configured with a relatively small number of components, thereby allowing simpler manufacturing.

As used herein, a "member sensitive to a target gas to be detected" refers to a member whose properties change in response to the concentration of the target gas to be detected in a gas to be measured. Since the heating resistor 31, when energized, changes its resistance value in response to the concentration of the target gas to be detected in the gas to be measured, the heating resistor 31 corresponds to a member sensitive to the target gas to be detected.

Another example of a member sensitive to the target gas to be detected is an electrode portion including a positive electrode, a negative electrode, and an electrolyte disposed therebetween, wherein a current flowing through the electrode portion changes in response to the concentration of the target gas to be detected in the gas to be measured.

Furthermore, examples of a member sensitive to oxygen gas include semiconductors such as tin oxide and zinc oxide, and piezoelectric materials such as barium titanate, zirconium titanate, and zinc oxide.

Next, a preferred method for manufacturing the gas concentration measuring device of the present invention will be described using a method for manufacturing the device 10 shown in Figs. 1, 2, 3-1, and 3-2 as an example. Figs. 4(a) to 4(e) show a preferred manufacturing procedure of the device 10 shown in Figs. 1, 2, 3-1, and 3-2. The manufacturing method includes the following steps in this order:
1. forming insulating layers on the substrate 11;
2. forming the heating resistor 31 on the insulating layer;
3. forming the fourth insulating layer 124 on the sides of and over the heating resistor 31; and
4. forming the bridge structure 20.

### 1. Step of Forming Insulating Layers on the Substrate 11

First, the substrate 11 is thermally oxidized by heating the substrate 11 to a temperature of 700°C or higher and 1400°C or lower in an atmosphere containing oxygen or water vapor, thereby forming the first insulating layer 121 and the fifth insulating layer 125, each composed of SiO₂, on the surfaces of the substrate 11. Then, the second insulating layer 122 and the sixth insulating layer 126, each composed of SiNx, are formed on the surfaces of the first insulating layer 121 and the fifth insulating layer 125, respectively, using a thin-film forming means described below.

As the thin-film forming means, physical vapor deposition (PVD) methods such as vapor deposition, sputtering, and ion plating, as well as chemical vapor deposition (CVD) methods, may be used. Among these methods, from the viewpoints of adjustability of residual stress and suitability for mass production, the second insulating layer 122 and the sixth insulating layer 126 are preferably formed using a PECVD (plasma-enhanced chemical vapor deposition) method or an LP-CVD (low-pressure chemical vapor deposition) method.

In Figs. 4(a) to 4(e), the first insulating layer 121, the second insulating layer 122, the third insulating layer 123, the fifth insulating layer 125, and the sixth insulating layer 126 are omitted from the illustration.

Next, the third insulating layer 123 is formed on the second insulating layer 122 (Fig. 4(a)). The third insulating layer 123 is formed over the entire surface of the substrate 11. The above-described thin-film forming means can be used to form the third insulating layer 123. In particular, when the third insulating layer 123 is formed of SiO₂, a PECVD method is preferably used from the viewpoints of adjustability of residual stress and suitability for mass production.

### 2. Step of Forming the Heating Resistor 31 on the Insulating Layer

Prior to formation of the heating resistor 31, the first adhesion layer 33 is formed as necessary. The first adhesion layer 33 can be formed by patterning using a lift-off method. More specifically, first, a layer (not shown) made of a photoresist is formed over the entire surface of the third insulating layer 123, and then exposure and development are performed to patten and form a mask (not shown) having a shape complementary to that of the first adhesion layer 33. Next, the first adhesion layer 33 is formed using a thin-film forming means while the third insulating layer 123 is covered with the mask. As the thin-film forming means, a sputtering method is particularly preferably used from the viewpoint of suitability for mass production. Finally, by removing the layer made of the photoresist, the first adhesion layer 33 having a desired shape is obtained.

Next, the heating resistor 31 is formed (Fig. 4(b)). In this manufacturing method, the heating resistor 31, the wires 312, and the pads 32 are formed simultaneously in order to simplify the manufacturing process. In forming the heating resistor 31, the wires 312, and the pads 32, the heating resistor 31, the wires 312, and the pads 32 are preferably first formed over the entire surface of the substrate 11 using any of the above-described thin-film forming means, followed by patterning.

As the thin-film forming means, a sputtering method is particularly preferably used from the viewpoint of suitability for mass production.

As a patterning method, a milling method is particularly preferably used from the viewpoint of suppressing burrs at end portions of the heating resistor 31. Alternatively, a lift-off method may be used instead of the milling method. When a lift-off method is used, the method for forming the heating resistor 31 is the same as that for forming the first adhesion layer 33, and a description thereof is therefore omitted here.

After the heating resistor 31 is formed, the second adhesion layer 34 is formed as necessary. The second adhesion layer 34 may be formed using the same method as that for forming the first adhesion layer 33.

In Fig. 4(b), the first adhesion layer 33 and the second adhesion layer 34 are omitted from the illustration.

### 3. Step of Forming the Fourth Insulating Layer 124 on the Sides of and Over the Heating Resistor 31

After the heating resistor 31 and, if necessary, the first adhesion layer 33 and the second adhesion layer 34 are formed, the fourth insulating layer 124 is formed. The fourth insulating layer 124 is formed over the entire surface of the substrate 11 (Fig. 4(c)). The fourth insulating layer 124 may be formed using the same method as that for forming the third insulating layer 123.

Through the above steps, a structure 40 including the insulating layers and the heating resistor 31 can be obtained.

### 4. Step of Forming the Bridge Structure 20

First, unnecessary portions of the first insulating layer 121, the second insulating layer 122, the third insulating layer 123, and the fourth insulating layer 124, which are the insulating layers located above the substrate 11, are removed (Fig. 4(d)). Here, the unnecessary portions refer to portions that do not overlap, in plan view, with the bridge structure 20 or the peripheral portion 24 in the device 10 to be obtained (Fig. 1).

It should be noted that in this step, in parallel with the removal of the unnecessary portions, a portion of the fourth insulating layer 124 formed on each pad 32 may be removed to expose the pads 32 to the outside. At this time, if necessary, a portion of the second adhesion layer 34 may also be removed in addition to the portion of the fourth insulating layer 124.

Removal of the unnecessary portions may be performed using an etching method such as a dry etching method or a wet etching method.

As the dry etching method, reactive ion etching (RIE) using fluorocarbon or halogen gas may be used. As the wet etching method, isotropic etching using hydrofluoric acid, nitric acid, sulfuric acid, phosphoric acid, or the like, or anisotropic etching using an alkaline solution such as KOH (potassium hydroxide), TMAH (tetramethylammonium hydroxide), or EDP (ethylenediamine pyrocatechol) may be used.

Among these methods, RIE may be preferably used for removal of the unnecessary portions from the viewpoint of preventing etching of the structure 40.

Next, unnecessary portions of the fifth insulating layer 125 and the sixth insulating layer 126, which are the insulating layers located below the substrate 11, are removed, and thereafter unnecessary portions of the substrate 11 are removed (Fig. 4(e)). Here, the unnecessary portions refer to portions that do not overlap, in plan view, with the peripheral portion 24.

The method for removing the unnecessary portions may be the same as that for removing the insulating layers located above the substrate 11.

In particular, RIE may be preferably used as the method for removing the unnecessary portions of the insulating layers located below the substrate 11. As the method for removing the unnecessary portions of the substrate 11, deep reactive ion etching (DRIE), in which an etching process using SF₆ (sulfur hexafluoride) and a passivation process using a fluoroalkane-based gas such as C₄F₈ (octafluorocyclobutane) are alternately performed, may be preferably performed.

When the device 10 shown in Fig. 9 is manufactured instead of the device 10 shown in Fig. 1, removal of unnecessary portions in the "step of forming the bridge structure 20" shown in Fig. 4(d) need not be performed. In this case as well, similarly to Fig. 4(d), a portion of the fourth insulating layer 124 formed on each pad 32 and, if necessary, a portion of the second adhesion layer 34 are preferably removed to expose the pads 32 to the outside.

When the device 10 shown in Fig. 12 is manufactured instead of the device 10 shown in Fig. 1, removal of unnecessary portions in the "step of forming the bridge structure 20" shown in Fig. 4(d) can be performed such that the partition walls 25 shown in Fig. 12 are formed.

Although the gas concentration measuring device of the present invention has been described above based preferred embodiments thereof, the present invention is not limited to such embodiments.

The above embodiments of the present invention encompass the following technical ideas.
(1) A gas concentration measuring device comprising:
   a heating resistor that generates heat when electricity is supplied; and
   a stage supporting the heating resistor,
   wherein the heating resistor overlaps with the stage in plan view,
   the stage has an area S of 3.6×10⁷ µm² or less in plan view,
   S/V is 0.0010 µm⁻¹ or more and 10 µm⁻¹ or less, where V denotes the total volume of the heating resistor and the stage, and
   the gas concentration measuring device measures the concentration of a target gas to be detected in a gas to be measured based on a resistance value of the heating resistor.
(2) The gas concentration measuring device as set forth in clause (1), wherein the total heat capacity of the heating resistor and the stage is 1.0×10⁻¹⁰ J/K or more and 3.2×10⁻² J/K or less.
(3) The gas concentration measuring device as set forth in clause (1) or (2), further comprising one or more bridges extending from the periphery of the stage, such that a bridge structure is formed.
(4) The gas concentration measuring device as set forth in any one of clauses (1) to (3), wherein the target gas to be detected is oxygen gas, argon gas, helium gas, water vapor, or carbon dioxide gas.
(5) The gas concentration measuring device as set forth in any one of clauses (1) to (4), wherein the target gas to be detected is oxygen gas.
(6) The gas concentration measuring device as set forth in clause (3),
   wherein the heating resistor comprises a series of filamentary elements,
   the series of filamentary elements comprises a single filamentary element or a plurality of filamentary elements having at least both end portions in common,
   at least two of the bridges extend from the periphery of the stage, and
   the series of filamentary elements extends to each of the two bridges.
(7) The gas concentration measuring device as set forth in clause (3) or (6), wherein the stage has an area S of 3.6×10⁷ µm² or less in plan view.
(8) The gas concentration measuring device as set forth in any one of clauses (3), (6), and (7),
   wherein S/V is 0.0010 µm⁻¹ or more and 10 µm⁻¹ or less, where V denotes the total volume of the heating resistor and the stage, and S denotes the area of the stage in plan view.
(9) The gas concentration measuring device as set forth in any one of clauses (1) to (8), wherein the heating resistor has a temperature coefficient of resistance αt of 100 ppm/°C or more at 25°C.
(10) The gas concentration measuring device as set forth in any one of clauses (1) to (9), wherein the heating resistor contains platinum or an alloy containing platinum.
(11) The gas concentration measuring device as set forth in any one of clauses (1) to (10), wherein the heating resistor alone is provided as a member sensitive to the target gas to be detected.
(12) The gas concentration measuring device as set forth in any one of clauses (1) to (12), further comprising:
   a peripheral portion spaced apart from the stage and surrounding the stage in plan view; and
   at least two bridges extending from the periphery of the stage and connected to the peripheral portion,
   wherein the value of V'/S is 10 µm or more and 2.0×10⁹ µm or less, where V' denotes the total volume of a space located below the stage and a space located between the stage and the peripheral portion, and S denotes the area of the stage in plan view.
(13) The gas concentration measuring device as set forth in clause (12), wherein the heating resistor is connected to wires extending to the bridges and the peripheral portion.
(14) The gas concentration measuring device as set forth in clause (13),
   wherein the heating resistor comprises one or two or more filamentary elements, and
   the value of a ratio R_{S}/R_{B} of a resistance value R_{S} of the heating resistor to a resistance value R_{B} of portions of the wires overlapping with the respective bridges in plan view is 0.01 or more and 10000 or less.
(15) The gas concentration measuring device as set forth in clause (12) or (13),
   wherein the total volume V' is 2.5×10⁴ µm³ or more and 1.8×10¹¹ µm³ or less, and
   the area S is 1.0×10² µm² or more and 3.6×10⁷ µm² or less.
(16) The gas concentration measuring device as set forth in any one of clauses (12) to (15),
   wherein the stage is rectangular in plan view,
   the bridges extend from the four corners of the stage, respectively,
   partition walls are disposed in spaces between adjacent bridges in plan view so as to separate the bridges from each other, and
   in plan view, a minimum distance between the bridges and the partition walls is 5 µm or more and 1500 µm or less.
(17) The gas concentration measuring device as set forth in clause (16), wherein, in plan view, the bridges each have a minimum width of 5 µm or more and 1500 µm or less.
(18) The gas concentration measuring device as set forth in clause (16) or (17), wherein, in plan view, a minimum distance between the stage and the partition walls is 5 µm or more and 1500 µm or less.
(19) A gas concentration measuring device as set forth in any one of clauses (1) to (18),
   wherein the stage has an area S of 3.6×10⁷ µm² or less in plan view,
   S/V is 0.0010 µm⁻¹ or more and 10 µm⁻¹ or less, where V denotes the total volume of the heating resistor and the stage, and
   the gas concentration measuring device measures the concentration of a target gas to be detected in a gas to be measured based on a resistance value of the heating resistor.
(20) A measurement method for measuring the concentration of a target gas to be detected in a gas to be measured using the gas concentration measuring device as set forth in any one of clauses (1) to (19).
(21) The measurement method as set forth in clause (20), wherein the concentration of the target gas to be detected in the gas to be measured is measured while a temperature difference between the heating resistor and the gas to be measured is set to 30°C or more by supplying electricity to the heating resistor.
(22) The measurement method as set forth in clause (20) or (21), wherein the gas to be measured contains oxygen gas and nitrogen gas.
(23) A gas concentration measuring device comprising:
   a heating resistor that generates heat when electricity is supplied;
   a stage supporting the heating resistor,
   a peripheral portion spaced apart from the stage and surrounding the stage in plan view; and
   at least two bridges extending from the periphery of the stage and connected to the peripheral portion,

   wherein the heating resistor overlaps with the stage in plan view, and
   the value of V'/S is 10 µm or more and 2.0×10⁹ µm or less, where V' denotes the total volume of a space located below the stage and a space located between the stage and the peripheral portion in the gas concentration measuring device, and S denotes the area of the stage in plan view, and
   the gas concentration measuring device measures the concentration of a target gas to be detected in a gas to be measured based on a resistance value of the heating resistor.
(24) A gas concentration measuring device comprising:
   a heating resistor that generates heat when electricity is supplied ; and
   a stage supporting the heating resistor,

   wherein the heating resistor overlaps with the stage in plan view,
   the stage has an area S of 3.6×10⁷ µm² or less in plan view,
   S/V is 0.0010 µm⁻¹ or more and 10 µm⁻¹ or less, where V denotes the total volume of the heating resistor and the stage, and
   the gas concentration measuring device measures the concentration of a target gas to be detected in a gas to be measured based on a resistance value of the heating resistor.

### Examples

Hereinafter, the present invention will be described in further detail based on examples. However, the scope of the present invention is not limited to the examples given below.

### Example 1

In the present example, a device 10 shown in Fig. 1 was manufactured.

### <Formation of Insulating Layers>

A substrate 11 made of silicon and having a crystal orientation of <100> and a thickness of 500 µm was provided. This substrate 11 was thermally oxidized to form a first insulating layer 121 and a fifth insulating layer 125, each composed of SiO₂, on the surfaces of the substrate 11. The first insulating layer 121 and the fifth insulating layer 125 each had a thickness of 600 nm. Next, a second insulating layer 122 and a sixth insulating layer 126, each composed of SiNₓ, were formed using an LP-CVD method. The second insulating layer 122 and the sixth insulating layer 126 each had a thickness of 200 nm. Furthermore, a third insulating layer 123 composed of SiO₂ was formed on the second insulating layer 122 using a PECVD method. The third insulating layer 123 had a thickness of 1000 nm.

### <Formation of Heating Resistor 31>

In accordance with the above-described method, a first adhesion layer 33, a heating resistor 31, and pads 32, as well as a second adhesion layer 34 were formed in this order on the third insulating layer 123 by sputtering. A lift-off method was used for patterning of the first adhesion layer 33 and the second adhesion layer 34, and a milling method was used for patterning of the heating resistor 31 and the pads 32.

In forming the heating resistor 31 and the pads 32, a platinum target material was used as a sputtering target material.

In forming the first adhesion layer 33 and the second adhesion layer 34, the sputtering was performed using a tantalum target material.

The heating resistor 31 had a thickness of 0.3 µm, and the first adhesion layer 33 and the second adhesion layer 34 had a thickness of 0.02 µm.

### <Formation of Fourth Insulating Layer 124>

A fourth insulating layer 124 composed of SiO₂ was formed on the third insulating layer 123 using the same method as that for forming the third insulating layer 123. The fourth insulating layer 124 had a thickness of 4000 nm. The thicknesses of the respective layers described above were calculated based on the deposition rate and the deposition time.

### <Formation of Bridge Structure 20>

Unnecessary portions of the first insulating layer 121, the second insulating layer 122, the third insulating layer 123, and the fourth insulating layer 124, which were the insulating layers located above the substrate 11, were removed by RIE.

Next, unnecessary portions of the fifth insulating layer 125 and the sixth insulating layer 126, which were the insulating layers located below the substrate 11, were removed. Removal of the unnecessary portions of the fifth insulating layer 125 and the sixth insulating layer 126 was performed by RIE. Thus, a gas concentration measuring device was obtained. Removal of unnecessary portions of the substrate 11 was performed by DRIE, in which an etching process using SF₆ and a passivation process using C₄F₈ were alternately performed.

### Example 2

In the present example, a gas concentration measuring device shown in Figs. 5 to 7 was manufactured.

First, a stage 21 made of silicon and having a crystal orientation of <100> and a thickness of 290 µm was provided. A heating resistor 31 and pads 32 were formed on one surface of the stage 21 by sputtering, each having a thickness of 0.3 µm. As target materials for the sputtering, a 2-inch platinum target material and a 2-inch Y₂O₃ target material were used. Film deposition was performed by co-sputtering in which power was supplied to the two targets simultaneously. DC sputtering was used for platinum, and RF sputtering was used for Y₂O₃. The sputtering was performed using argon gas at an argon gas flow rate of 50 sccm and an argon gas pressure of 4 Pa. The power was 90 W and 200 W, respectively, and the sputtering was performed at room temperature. The heating resistor 31 contained 25 vol% Y₂O₃ and 75 vol% platinum.

A platinum paste was applied to the two pads 32 and to two locations on a surface opposite to the pads 32, followed by firing at 700°C for 1 hour in air to form joining portions 37. Next, a Pt wire (bridge 22) having a wire diameter of 50 µm was bonded to the platinum paste at each applied portion by resistance welding. The other end portions of the Pt wires were bonded to terminals 52 by resistance welding, whereby the stage 21 was fixed to the terminals 52 via the bridges 22. Thus, a gas concentration measuring device was obtained.

### Example 3

A gas concentration measuring device was manufactured in the same manner as in Example 2, except that a substrate made of alumina and having a thickness of 0.26 mm was used as the stage 21, and the heating resistor 31 and the pads 32, each having a thickness of 13 µm, were formed on one surface of the substrate using a Pt paste by screen printing.

### Example 4

A device 10 shown in Fig. 1 was manufactured in the same manner as in Example 1, except that a substrate having a thickness of 300 µm was used as the substrate 11, and the thickness of the fourth insulating layer 124 was set to 1000 nm.

### Example 5

A device 10 shown in Figs. 9 to 11 and having no bridges 22 was manufactured in the same manner as in Example 1 except for the following differences. A substrate having a thickness of 300 µm was used as the substrate 11, and the thickness of the fourth insulating layer 124 was set to 1000 nm. In the <Formation of Bridge Structure 20> section, only the portions of the fourth insulating layer 124 located above the pads 32 were removed to expose the pads 32 to the outside. The bridge structure 20 was not formed.

### Example 6

A device 10 shown in Fig. 1 was manufactured in the same manner as in Example 4, except that the positions and sizes of the unnecessary portions removed in the <Formation of Bridge Structure 20> section were changed. The stage 21 and the bridges 22 in the device 10 of Example 6 were geometrically similar in plan view to the stage 21 and the bridges 22 in the device 10 of Example 4, and, when their sizes in plan view were compared, the former was 0.3 times the latter.

### Comparative Example 1

A gas concentration measuring device shown in Fig. 8 was manufactured.

A gas concentration measuring device was obtained in the same manner as in Example 3 except for the following differences. After the heating resistor 31 was formed on one surface of the stage 21 in Example 3, a cell including an electrode 61a made of platinum, an electrode 61b made of a perovskite-type La_{0.6}Sr_{0.4}Co_{0.2}Fe_{0.8}O_{3-δ} complex oxide, and a solid electrolyte 62 made of lanthanum silicate and disposed between the two electrodes was bonded to the other surface of the stage 21 using a Pt paste. Next, a sealing material 63 made of glass was applied in an air atmosphere such that, of the two electrodes 61a and 61b, the electrode 61a located closer to the stage 21 was sealed.

The gas concentration measuring device of Comparative Example 1 can measure the oxygen concentration based on the concentration electromotive force generated between the two electrodes 61a and 61b, and the heating resistor 31 is used to heat the solid electrolyte 62.

### Evaluation

### <Measurement of S, V, and Heat Capacity>

In Examples 1 and 4 to 6, the thicknesses of the layers constituting the stage 21 and of the heating resistor 31 were calculated based on the deposition rates of those layers and the heating resistor 31 calculated in advance. In Examples 2 and 3, the thicknesses of the stage 21 and the heating resistor 31 were measured using a vernier caliper.

Dimensions of the stage 21 and the heating resistor 31 other than thickness were measured using a microscope (VHX-8000, manufactured by Keyence Corp.) or a vernier caliper.

Based on the dimensions measured as described above and the specific heat and density of the materials constituting the respective layers, the area S of the stage 21 in plan view, as well as the total volume V and the total heat capacity of the heating resistor 31 and the stage 21, were calculated. Table 1 shows the results.

### <Measurement of Responsiveness to Concentration of Oxygen Gas>

The responsiveness of the heating resistor 31 to the concentration of oxygen gas was measured when the heating resistor was energized. The measurement was conducted using the gas concentration measuring devices of Examples 1 to 5 under the following conditions:
- Energization conditions: constant power drive at an applied voltage that resulted in 40 mW, 50 mW, 80 mW, 700 mW, or 1300 mW under atmospheric pressure
- Gas flow rate: 100 sccm
- Gas to be measured: a mixed gas of oxygen gas and nitrogen gas
- Room temperature (temperature of the gas to be measured): 25°C

The oxygen gas concentration in the gas to be measured was set as follows:
- 140 to 240 seconds after the start of measurement: 100 vol%
- 240 to 340 seconds after the start of measurement: 80 vol%
- 340 to 440 seconds after the start of measurement: 60 vol%
- 440 to 540 seconds after the start of measurement: 40 vol%
- 540 to 640 seconds after the start of measurement: 21 vol%
- 640 to 740 seconds after the start of measurement: 10 vol%
- 740 to 800 seconds after the start of measurement: 21 vol%

Fig. 15 shows the rate of change in resistance of the heating resistor 31 when the heating resistor 31 was energized under a constant power condition of 80 mW. The rate of change in resistance is a value (ppm) based on the resistance value of the heating resistor 31 when the oxygen concentration in the gas to be measured is 21 vol%, and is calculated according to the following equation. In the equation, Rₓ represents the resistance value at an oxygen concentration of x vol%, and R₂₁ represents the resistance value at an oxygen concentration of 21 vol%.$Rate of change in resistance = \left({R}_{x} - {R}_{21}\right) / {R}_{21} \times {10}^{6}$

Table 2 shows the temperature of the heating resistor 31 and the temperature difference between the temperature of the heating resistor 31 and room temperature (the temperature of the gas to be measured) during energization under each constant power condition.

The temperature of the heating resistor 31 was measured in an environment at an oxygen concentration of 21% using a radiation thermometer (T640 from FLIR, CLOSE-UP LENS). During the measurement, the emissivity was set to 0.66 for Example 1, 0.63 for Example 2, 0.88 for Example 3 and Comparative Example 1, and 0.70 for Examples 4 and 5.

In Tables 1 and 2, "-" indicates that the value was not measured.

### <Calculation of Sensitivity>

The rate of change in resistance (ppm) of the heating resistor 31 obtained in the <Measurement of Responsiveness to Concentration of Oxygen Gas> section above was plotted against the oxygen concentration (%) in the gas to be measured. Next, a regression line was obtained by the least squares method, and the slope of the regression line was calculated as the sensitivity. Table 2 shows the results. Fig. 16 shows a graph representing the relationship between the rate of change in resistance of the heating resistor 31 and the oxygen concentration when the heating resistor 31 was energized under a constant power condition of 80 mW.

### <Evaluation of Response Speed>

A comparison was made between the gas concentration measuring devices of Example 3 and Comparative Example 1 in terms of the response speed (sec) determined by measuring the time required for the sensor output to respond from 10% to 90% after the oxygen gas concentration was changed from 60% to 90%. The sensor output in Example 3 was the resistance value of the heating resistor, whereas the sensor output in Comparative Example 1 was the value of the electromotive force generated between the two electrodes. The energization was performed under a constant power condition of 1300 mW. The flow rate in Comparative Example 1 was set to 50 sccm. The other conditions were the same as those described in the <Measurement of Responsiveness to Concentration of Oxygen Gas> section above. Table 2 shows the results.

### <Measurement of Temperature Coefficient of Resistance αₜ of Heating Resistor>

Using a hot/cold stage (manufactured by INSTEC), the rate of change in the resistance value of the heating resistor 31 upon heating to 500°C was measured, with the resistance value of the heating resistor at an oxygen concentration of 21 vol% in the gas to be measured and at 25°C taken as a reference. The rate of change in the resistance value was calculated as (R₅₀₀-R₂₅)/R₂₅/(500-25)×10⁶ (ppm/°C), where R₅₀₀ represents the resistance value at 500°C and R₂₅ represents the resistance value at the reference temperature of 25°C.

Table 1 shows the results.

**[Table 1]**

| | Area S (µm²) | Volume V (µm³) | Stage thickness (µm) | S/V (µm⁻¹) | Heat capacity (J/K) | Temperature coefficient of resistance αₜ (ppm/°C) |
|---|---|---|---|---|---|---|
| Ex. 1 | 2.5×10⁵ | 1.4×10⁶ | 5.6 | 0.1786 | 8.1×10⁻⁶ | 1169 |
| Ex. 2 | 4.3×10⁶ | 1.2×10⁹ | 290 | 0.0034 | 2.5×10⁻³ | 2972 |
| Ex. 3 | 1.6×10⁷ | 4.2×10⁹ | 264 | 0.0038 | 1.4×10⁻² | 1775 |
| Ex. 4 | 2.5×10⁵ | 7.5×10⁵ | 3 | 0.3333 | 4.3×10⁻⁶ | 3117 |
| Ex. 5 | 1.0×10⁶ | 3.0×10⁶ | 3 | 0.3333 | 3.2×10⁻⁵ | 3117 |
| Ex. 6 | 2.2×10⁴ | 6.6×10⁴ | 3 | 0.3333 | 3.9×10⁻⁷ | 3135 |

**[Table 2]**

| Power | 40 mW | | | 50 mW | | | 80 mW | | | 700 mW | | | 1300 mW | | | |
|---|---|---|---|---|---|---|---|---|---|---|---|---|---|---|---|---|
| Evaluation item | Sensitivity | Temperature of resistor (°C) | Temperature difference (°C) | Sensitivity | Temperature of resistor (°C) | Temperature difference (°C) | Sensitivity | Temperature of resistor (°C) | Temperature difference (°C) | Sensitivity | Temperature of resistor (°C) | Temperature difference (°C) | Sensitivity | Temperature of resistor (°C) | Temperature difference (°C) | Response speed (sec.) |
| Ex. 1 | 91.4 | 372.02 | 347.02 | - | - | - | 140.6 | 600.18 | 575.18 | - | - | - | - | - | - | - |
| Ex. 2 | 26.1 | 88.2 | 63.2 | - | - | - | 48.9 | 105.7 | 80.7 | 130.4 | 575.9 | 550.9 | - | - | - | - |
| Ex. 3 | 7.6 | 60.8 | 35.8 | - | - | - | 17.5 | 87.7 | 62.7 | 109.3 | 286.5 | 261.5 | 98.4 | 682.6 | 657.6 | 10 |
| Ex. 4 | - | - | - | 153 | 405.1 | 380.1 | - | - | - | - | - | - | - | - | - | - |
| Ex. 5 | 119 | 318.6 | 293.6 | 146 | 382.4 | 357.4 | - | - | - | - | - | - | - | - | - | - |
| Com. Ex. 1 | - | - | - | - | - | - | - | - | - | - | - | - | - | - | - | 22 |

As shown in Fig. 13 and Table 2, a favorable linear relationship was observed between the oxygen gas concentration in the gas to be measured and the resistance value of the heating resistor 31. Accordingly, it can be understood that the gas concentration measurement device of the present invention is capable of measuring the oxygen gas concentration with high accuracy, even when the target gas contains oxygen gas and nitrogen gas, despite the fact that the device can be manufactured by a simple process. In contrast, the gas concentration measurement device of Comparative Example 1 had room for improvement in that its manufacturing process was complicated.

### <Measurement of Responsiveness to Concentrations of Hydrogen Gas, Helium Gas, Argon Gas, and Water Vapor>

Using hydrogen gas, helium gas, argon gas, or water vapor as the target gas to be detected, the responsiveness to the concentration of the target gas to be detected was measured in the same manner as in the case of oxygen gas. The measurement was conducted using the gas concentration measuring devices of Examples 2, 4, and 6 under the following conditions:
- Energization conditions: constant power drive at an applied voltage that resulted in 30 mW under atmospheric pressure
- Gas flow rate: 200 sccm
- Gas to be measured: a mixed gas of the target gas to be detected and nitrogen gas
- Room temperature (temperature of the gas to be measured): 25°C

The concentration of the target gas to be detected in the gas to be measured was set as follows.

When the target gas to be detected was hydrogen gas:
- 0 to 180 seconds after the start of measurement: 0 vol%
- 180 to 360 seconds after the start of measurement: 2 vol%
- 360 to 540 seconds after the start of measurement: 3 vol%
- 540 to 720 seconds after the start of measurement: 4 vol%
- 720 to 900 seconds after the start of measurement: 0 vol%

When the target gas to be detected was helium gas or argon gas:
- 0 to 180 seconds after the start of measurement: 0 vol%
- 180 to 360 seconds after the start of measurement: 5 vol%
- 360 to 540 seconds after the start of measurement: 10 vol%
- 540 to 720 seconds after the start of measurement: 20 vol%
- 720 to 900 seconds after the start of measurement: 50 vol%
- 900 to 1080 seconds after the start of measurement: 100 vol%
- 1080 to 1260 seconds after the start of measurement: 0 vol%

When the target gas to be detected was water vapor:
Instead of measuring under a flow of the target gas to be detected, a constant temperature and humidity chamber housing the gas concentration measuring device was filled with the target gas to be detected at 25°C, and the relative humidity in the constant temperature and humidity chamber was then varied as follows:
- 0 to 4 hours after the start of measurement: 10% RH
- 4 to 7 hours after the start of measurement: 20% RH
- 710 hours after the start of measurement: 40% RH
- 10 to 13 hours after the start of measurement: 60% RH
- 13 to 16 hours after the start of measurement: 80% RH
- 16 to 19 hours after the start of measurement: 60% RH

The rate of change in resistance of the heating resistor 31 when the heating resistor 31 was energized under the above-described conditions is shown in Figs. 17 to 20 for each target gas to be detected. The rate of change in resistance is a value (ppm) based on the resistance value of the heating resistor 31 when the concentration of the target gas to be detected in the gas to be measured is 0 vol% (or 10% RH when the target gas to be detected is water vapor), and is calculated based on the following equation. In the equation, Rₓ represents the resistance value when the concentration of the target gas to be detected is x vol% (or x% RH when the target gas to be detected is water vapor), and R₀ represents the resistance value when the concentration of the target gas to be detected is 0 vol% (or 10% RH when the target gas to be detected is water vapor). $Rate of change in resistance = \left({R}_{x}-{R}_{0}\right) / {R}_{0} \times {10}^{6}$

### <Calculation of Sensitivity>

The rate of change in resistance (ppm) of the heating resistor 31 obtained in the <Measurement of Responsiveness to Concentrations of Hydrogen Gas, Helium Gas, Argon Gas, and Water Vapor> section above was plotted against the concentration (%) of the target gas to be detected in the gas to be measured. Next, a regression line was obtained by the least squares method, and the slope of the regression line was calculated as the sensitivity. The calculated sensitivities are shown in Table 3. Furthermore, graphs representing the relationship between the rate of change in resistance of the heating resistor 31 and the concentration of the target gas to be detected when the heating resistor 31 was energized under the above-described conditions are shown in Figs. 21 to 24 for each target gas to be detected.

In Table 3, "-" indicates that the value was not measured.

**[Table 3]**

| Target gas to be detected | Hydrogen gas | Helium gas | Argon gas | Water vapor |
|---|---|---|---|---|
| Ex. 2 | -901.7 | -586.3 | 815.7 | - |
| Ex. 4 | -5897.8 | -2575.5 | 876.1 | 36.8 |
| Ex. 6 | -5984.4 | -3169.9 | 150.4 | - |

As shown in Table 3, it can be understood that the concentration of the target gas to be detected can be measured with high sensitivity even when hydrogen gas, helium gas, argon gas, or water vapor is used as the target gas to be detected.

### Examples 7 to 16

In Examples 7 to 16, devices 10 shown in Figs. 12 to 14 were manufactured. Table 4 shows the distances d1 and d2 (d1 = d2 in all of these examples), R_{S}/R_{B}, the minimum width of each bridge 22, the minimum distance between the bridges 22 and the partition walls 25, S, V', and V'/S in the devices 10 manufactured in the respective examples.

It should be noted that the minimum distance between the stage 21 and the partition walls 25 is the same as the minimum distance between the bridges 22 and the partition walls 25.

Furthermore, the devices 10 of Examples 7 and 10 to 16 did not include the partition walls 25.

### <Formation of Insulating Layers>

A substrate 11 made of silicon and having a crystal orientation of <100> and a thickness of 300 µm was provided. This substrate 11 was thermally oxidized to form a first insulating layer 121 and a fifth insulating layer 125, each composed of SiO₂, on the surfaces of the substrate 11. The first insulating layer 121 and the fifth insulating layer 125 each had a thickness of 600 nm. Next, a second insulating layer 122 and a sixth insulating layer 126, each composed of SiNₓ, were formed using an LP-CVD method. The second insulating layer 122 and the sixth insulating layer 126 each had a thickness of 200 nm. Furthermore, a third insulating layer 123 composed of SiO₂ was formed on the second insulating layer 122 using a PECVD method. The third insulating layer 123 had a thickness of 1000 nm.

### <Formation of Heating Resistor 31>

In accordance with the above-described method, a first adhesion layer 33, a heating resistor 31, and pads 32, as well as a second adhesion layer 34 were formed in this order on the third insulating layer 123 by sputtering. A lift-off method was used for patterning of the first adhesion layer 33 and the second adhesion layer 34, and a milling method was used for patterning of the heating resistor 31 and the pads 32.

In forming the heating resistor 31 and the pads 32, a platinum target material was used as a sputtering target material.

In forming the first adhesion layer 33 and the second adhesion layer 34, the sputtering was performed using a tantalum target material.

The heating resistor 31 had a thickness of 0.20 µm, and the first adhesion layer 33 and the second adhesion layer 34 had a thickness of 0.020 µm.

### <Formation of Fourth Insulating Layer 124>

A fourth insulating layer 124 composed of SiO₂ was formed on the third insulating layer 123 using the same method as that for forming the third insulating layer 123. The fourth insulating layer 124 had a thickness of 1000 nm. The thicknesses of the respective layers described above were calculated based on the deposition rate and the deposition time.

### <Formation of Bridge Structure 20>

Unnecessary portions of the first insulating layer 121, the second insulating layer 122, the third insulating layer 123, and the fourth insulating layer 124, which were the insulating layers located above the substrate 11, were removed by RIE. Next, unnecessary portions of the fifth insulating layer 125 and the sixth insulating layer 126, which were the insulating layers located below the substrate 11, were removed. Removal of the unnecessary portions of the fifth insulating layer 125 and the sixth insulating layer 126 was performed by RIE. Thus, a gas concentration measuring device was obtained. Removal of unnecessary portions of the substrate 11 was performed by DRIE, in which an etching process using SF₆ and a passivation process using C₄F₈ were alternately performed.

### Evaluation

### <Measurement of Responsiveness to Concentration of Oxygen Gas>

The responsiveness of the heating resistor 31 to the concentration of oxygen gas was measured when the heating resistor was energized. The measurement was performed under the following conditions:
- Energization conditions: constant power drive at an applied voltage that resulted in 50 mW under atmospheric pressure
- Gas flow rate: 300 sccm
- Gas to be measured: a mixed gas of oxygen gas and nitrogen gas
- Room temperature (temperature of the gas to be measured): 25°C

The oxygen gas concentration in the gas to be measured was set as follows:
- 180 to 360 seconds after the start of measurement: 100 vol%
- 360 to 540 seconds after the start of measurement: 80 vol%
- 540 to 720 seconds after the start of measurement: 60 vol%
- 720 to 900 seconds after the start of measurement: 40 vol%
- 900 to 1080 seconds after the start of measurement: 21 vol%
- 1080 to 1260 seconds after the start of measurement: 10 vol%
- 1260 to 1440 seconds after the start of measurement: 21 vol%

The rate of change in resistance is a value (ppm) based on the resistance value of the heating resistor 31 when the oxygen concentration in the gas to be measured is 21 vol%, and is calculated based on the following equation. In the equation, Rₓ represents the resistance value at an oxygen concentration of x vol%, and R₂₁ represents the resistance value at an oxygen concentration of 21 vol%. $Rate of change in resistance = \left({R}_{x}-{R}_{21}\right) / {R}_{21} \times {10}^{6}$

### <Calculation of Sensitivity>

The rate of change in resistance (ppm) of the heating resistor 31 obtained in the <Measurement of Responsiveness to Concentration of Oxygen Gas> section above was plotted against the oxygen concentration (%) in the gas to be measured. Next, a regression line was obtained by the least squares method, and the slope of the regression line was calculated as the sensitivity. Table 4 shows the results.

**[Table 4]**

| | d1 and d2 (µm) | R_{S}/R_{B} | Minimum width of each bridge (µm) | Minimum distance between bridges and partition walls (µm) | S (µm²) | V' (µm³) | V'/S (µm) | Sensitivity (Oxygen gas) (ppm/O₂%) | S/V (µm) | Heat capacity (J/K) |
|---|---|---|---|---|---|---|---|---|---|---|
| Ex. 7 | 1000 | 13.17 | 100 | - | 2.450×10⁵ | 3.024×10⁸ | 1.234×10³ | 165.4 | 0.3333 | 4.3×10⁻⁶ |
| Ex. 8 | 1000 | 13.17 | 100 | 50 | 2.450×10⁵ | 3.017×10⁸ | 1.231×10³ | 154.7 | 0.3333 | 4.3×10⁻⁶ |
| Ex. 9 | 1000 | 13.17 | 100 | 75 | 2.450×10⁵ | 3.020×10⁸ | 1.232×10³ | 165.4 | 0.3333 | 4.3×10⁻⁶ |
| Ex. 10 | 1000 | 7.90 | 60 | - | 2.450×10⁵ | 3.027×10⁸ | 1.235×10³ | 157.5 | 0.3333 | 4.3×10⁻⁶ |
| Ex. 11 | 1000 | 7.90 | 80 | - | 2.450×10⁵ | 3.025×10⁸ | 1.235×10³ | 159.4 | 0.3333 | 4.3×10⁻⁶ |
| Ex. 12 | 1000 | 7.90 | 120 | - | 2.450×10⁵ | 3.022×10⁸ | 1.234×10³ | 162.1 | 0.3333 | 4.3×10⁻⁶ |
| Ex. 13 | 1000 | 7.90 | 100 | - | 2.450×10⁵ | 3.024×10⁸ | 1.234×10³ | 152.7 | 0.3333 | 4.3×10⁻⁶ |
| Ex. 14 | 1000 | 18.43 | 100 | - | 2.450×10⁵ | 3.024×10⁸ | 1.234×10³ | 169.2 | 0.3333 | 4.3×10⁻⁶ |
| Ex. 15 | 600 | 13.17 | 60 | - | 1.470×10⁵ | 1.089×10⁸ | 7.406×10² | 173.6 | 0.3333 | 1.5×10⁻⁶ |
| Ex. 16 | 800 | 13.17 | 80 | - | 1.960×10⁵ | 1.935×10⁸ | 9.874×10² | 175.3 | 0.3333 | 2.8×10⁻⁶ |

As shown in Table 4, the gas concentration measuring devices of the examples in which V'/S was within a predetermined numerical range all exhibited excellent measurement sensitivity. In particular, the sensitivity increased as the value of the resistance ratio R_{S}/R_{B} increased. In addition, there was a tendency for the sensitivity to be higher when the area S of the stage was smaller.

### Industrial Applicability

According to the present invention, a gas concentration measuring device that can be manufactured by a simple process is provided.

## Claims

1. A gas concentration measuring device comprising:
a heating resistor that generates heat when electricity is supplied; and
a stage supporting the heating resistor,
wherein the heating resistor overlaps with the stage in plan view,
the stage has an area S of 3.6×10⁷ µm² or less in plan view,
S/V is 0.0010 µm⁻¹ or more and 10 µm⁻¹ or less, where V denotes the total volume of the heating resistor and the stage, and
the gas concentration measuring device measures the concentration of a target gas to be detected in a gas to be measured based on a resistance value of the heating resistor.

2. The gas concentration measuring device according to claim 1, wherein the total heat capacity of the heating resistor and the stage is 1.0×10⁻¹⁰ J/K or more and 3.2×10⁻² J/K or less.

3. The gas concentration measuring device according to claim 1, further comprising one or more bridges extending from the periphery of the stage, such that a bridge structure is formed.

4. The gas concentration measuring device according to claim 1, wherein the target gas to be detected is oxygen gas, argon gas, helium gas, water vapor, or carbon dioxide gas.

5. The gas concentration measuring device according to claim 1, wherein the target gas to be detected is oxygen gas.

6. The gas concentration measuring device according to claim 3,
wherein the heating resistor comprises a series of filamentary elements,
the series of filamentary elements comprises a single filamentary element or a plurality of filamentary elements having at least both end portions in common,
at least two of the bridges extend from the periphery of the stage, and
the series of filamentary elements extends to each of the two bridges.

7. The gas concentration measuring device according to claim 1, wherein the heating resistor has a temperature coefficient of resistance αₜ of 100 ppm/°C or more at 25°C.

8. The gas concentration measuring device according to claim 1, wherein the heating resistor contains platinum or an alloy containing platinum.

9. The gas concentration measuring device according to claim 1, wherein the heating resistor alone is provided as a member sensitive to the target gas to be detected.

10. The gas concentration measuring device according to claim 1, further comprising:
a peripheral portion spaced apart from the stage and surrounding the stage in plan view; and
at least two bridges extending from the periphery of the stage and connected to the peripheral portion,
wherein the value of V'/S is 10 µm or more and 2.0×10⁹ µm or less, where V' denotes the total volume of a space located below the stage and a space located between the stage and the peripheral portion.

11. The gas concentration measuring device according to claim 10, wherein the heating resistor is connected to wires extending to the bridges and the peripheral portion.

12. The gas concentration measuring device according to claim 11,
wherein the heating resistor comprises one or two or more filamentary elements, and
the value of a ratio R_{S}/R_{B} of a resistance value R_{S} of the heating resistor to a resistance value R_{B} of portions of the wires overlapping with the respective bridges in plan view is 0.01 or more and 10000 or less.

13. The gas concentration measuring device according to claim 10,
wherein the total volume V' is 2.5×10⁴ µm³ or more and 1.8×10¹¹ µm³ or less, and
the area S is 1.0×10² µm² or more.

14. The gas concentration measuring device according to claim 10,
wherein the stage is rectangular in plan view,
the bridges extend from the four corners of the stage, respectively,
partition walls are disposed in spaces between adjacent bridges in plan view so as to separate the bridges from each other, and
in plan view, a minimum distance between the bridges and the partition walls is 5 µm or more and 1500 µm or less.

15. The gas concentration measuring device according to claim 14, wherein, in plan view, the bridges each have a minimum width of 5 µm or more and 1500 µm or less.

16. The gas concentration measuring device according to claim 14, wherein, in plan view, a minimum distance between the stage and the partition walls is 5 µm or more and 1500 µm or less.

17. A measurement method for measuring the concentration of a target gas to be detected in a gas to be measured using the gas concentration measuring device according to any one of claims 1 to 16.

18. The measurement method according to claim 17, wherein the concentration of the target gas to be detected in the gas to be measured is measured while a temperature difference between the heating resistor and the gas to be measured is set to 30°C or more by supplying electricity to the heating resistor.

19. The measurement method according to claim 17, wherein the gas to be measured contains oxygen gas and nitrogen gas.

20. A gas concentration measuring device comprising:
a heating resistor that generates heat when electricity is supplied;
a stage supporting the heating resistor,
a peripheral portion spaced apart from the stage and surrounding the stage in plan view; and
at least two bridges extending from the periphery of the stage and connected to the peripheral portion,
wherein the heating resistor overlaps with the stage in plan view, and
the value of V'/S is 10 µm or more and 2.0×10⁹ µm or less, where V' denotes the total volume of a space located below the stage and a space located between the stage and the peripheral portion in the gas concentration measuring device, and S denotes the area of the stage in plan view, and
the gas concentration measuring device measures the concentration of a target gas to be detected in a gas to be measured based on a resistance value of the heating resistor.
